# EUROPEAN PATENT APPLICATION

(11) **EP 2 530 266 A1**
(43) Date of publication of application: **05.12.2012**
(21) Application number: 11737111.2
(22) Date of filing: 27.01.2011
(51) Int. Cl.: F01N 3/02, F02D 29/00

(54) **EXHAUST-GAS PURIFICATION SYSTEM FOR HYDRAULIC CONSTRUCTION EQUIPMENT**

(30) Priority: 28.01.2010 JP 2010017447
(71) Applicant: Hitachi Construction Machinery Co., Ltd., Bunkyo-ku, Tokyo 112-8563 (JP)
(72) Inventor: ARAI Yasushi, Tsuchiura-shi Ibaraki 300-0013 (JP); ISHIKAWA Kouji, Tsuchiura-shi Ibaraki 300-0013 (JP); KAMIYA Shohei, Tsuchiura-shi Ibaraki 300-0013 (JP); TSUKADA Hidenobu, Tsuchiura-shi Ibaraki 3000013 (JP); NAKAMURA Tsuyoshi, Tsuchiura-shi Ibaraki 300-0013 (JP)
(74) Representative: Beetz & Partner
(86) International application number: PCT/JP2011/051647
(87) International publication number: WO 2011/093400

(57) **Abstract**

When an output value of an exhaust resistance sensor 34 has reached or exceeded a set value ΔPa, a controller 20 executes recovery control of a filter of an exhaust gas purification device 32 after conducting exhaust temperature increasing control by operating a pump discharge pressure increasing device (solenoid proportional valve) 38 so that exhaust gas temperature as an output value of an exhaust temperature sensor 33 reaches a preset value Ta. Thus, the recovery process of the exhaust gas purification device can be executed with reliability by increasing the exhaust gas temperature irrespective of the operating environment and the fuel consumption can be kept at a minimum necessary level.

## Description

### Technical Field

The present invention relates to an exhaust gas purification system for a hydraulic operating machine. In particular, the invention relates to an exhaust gas purification system for a hydraulic operating machine (e.g., hydraulic shovel) for recovering a filter of an exhaust gas purification device installed in the hydraulic operating machine by combusting and removing deposits accumulated on the filter.

### Background Art

Conventional exhaust gas purification systems for purifying the exhaust gas of a diesel engine include those described in Patent Literatures 1 and 2, for example. In the exhaust gas purification system described in the Patent Literature 1, an exhaust gas purification device including a filter called "particulate filter" (DPF: Diesel Particulate Filter) is placed in the exhaust system of the engine of a transporting vehicle (e.g., truck) and the amount of particulate matter (hereinafter referred to as "PM") discharged to the outside is reduced by collecting the PM contained in the exhaust gas with the filter. In order to prevent the clogging of the PM filter, the exhaust gas purification system executes automatic recovery control and manual recovery control, for example. For the recovery control, an oxidation catalyst is placed upstream of the filter and the amount of the PM accumulated on the filter (PM accumulation amount) is estimated by detecting the differential pressure across the filter. In the automatic recovery control, the temperature of the exhaust gas is increased automatically when the PM accumulation amount has exceeded a prescribed value, by which the oxidation catalyst is activated and the PM accumulated on the filter is combusted and removed. In the manual recovery control, when the PM accumulation amount has exceeded a prescribed value, a warning lamp is lit up so as to urge the operator to start recovery control by manual operation in a state in which the vehicle is stopped. When a manual recovery switch is turned ON by the operator, the temperature of the exhaust gas is increased, by which the oxidation catalyst is activated and the PM accumulated on the filter is combusted and removed.

In the exhaust gas purification system described in the Patent Literature 2, an exhaust resistance sensor is installed in an exhaust gas processing device of a hydraulic operating machine. For the automatic recovery control, the degree of the filter clogging is detected. Before the filter clogging proceeds to a level at which burnout is caused, a hydraulic load is exerted on the engine by simultaneously increasing the discharge rate and the discharge pressure of a hydraulic pump. With the increase in the engine load, the output power of the engine increases and the exhaust gas temperature rises, by which the deposits accumulated on the filter are combusted and the filter is recovered.

### Prior Art Literature

### Patent Literature

Patent Literature 1: JP,A 2005-120895
Patent Literature 2: Japanese Patent No. 3073380

### Summary of the Invention

### Problem to be Solved by the Invention

For transporting vehicles like trucks, the purification of the exhaust gas is commonly conducted today by installing an exhaust gas purification device as described in the Patent Literature 1. Also for hydraulic operating machines typified by hydraulic shovels, etc., exhaust gas regulations (exhaust emission control) are being tightened stepwise in recent years from the viewpoint of environmental preservation and various control technologies related to exhaust gas purification systems are being discussed as described in the Patent Literature 2.

In the technique of the Patent Literature 2, the degree of the clogging is detected by the exhaust resistance sensor installed in the exhaust gas processing device. Before the filter clogging proceeds to the level at which burnout is caused, the discharge rate and the discharge pressure of the hydraulic pump are simultaneously increased to increase the engine load and raise the exhaust gas temperature, thereby carrying out the recovery of the filter.

However, the atmospheric temperature changes in a wide range (e.g., -30°C - 40°C) in the actual operating environment of a hydraulic operating machine and the exhaust gas temperature rises accordingly when the atmospheric temperature rises. Therefore, the technique of the Patent Literature 1 can increase the exhaust gas temperature to an unnecessary high level by the exhaust gas temperature increasing control and consume the fuel wastefully.

Further, the technique of the Patent Literature 2 specifies that the exhaust gas temperature increasing control is desired to be executed in a non-operating state (in which the operator is not operating the machine/vehicle). In this case, an operation interruption time (during which the operation or work has to be interrupted) becomes necessary.

A first object of the present invention is to provide an exhaust gas purification system for a hydraulic operating machine that is capable of executing the recovery process of the exhaust gas purification device with reliability by increasing the exhaust gas temperature irrespective of the operating environment and capable of keeping the fuel consumption at a minimum necessary level.

A second object of the present invention is to provide an exhaust gas purification system for a hydraulic operating machine that is capable of executing the recovery process of the exhaust gas purification device with reliability by increasing the exhaust gas temperature irrespective of the operating environment, capable of keeping the fuel consumption at a minimum necessary level, and capable of reducing the operation interruption frequency of the machine.

### Means for Solving the Problem

(1) In order to achieve the above first object, an invention described in claim 1 provides an exhaust gas purification system for a hydraulic operating machine equipped with a diesel engine, an exhaust gas purification device provided in an exhaust line of the engine, a variable displacement hydraulic pump driven by the engine, a pump displacement adjusting device for controlling the displacement of the hydraulic pump, and at least one hydraulic actuator driven by hydraulic fluid discharged from the hydraulic pump. The exhaust gas purification system comprises: an exhaust resistance sensor for detecting exhaust resistance of the exhaust gas purification device; an exhaust temperature sensor for detecting temperature of exhaust gas in the exhaust gas purification device; a pump discharge pressure increasing device provided in a hydraulic line, through which the hydraulic fluid discharged from the hydraulic pump flows, for increasing discharge pressure of the hydraulic pump; and a recovery control device for executing recovery of the exhaust gas purification device by combusting and removing particulate matter accumulated in the exhaust gas purification device when the exhaust resistance detected by the exhaust resistance sensor has reached or exceeded a set value. The recovery control device includes an exhaust temperature increasing control device which increases the exhaust gas temperature so as to make the exhaust gas temperature detected by the exhaust temperature sensor reach a preset value by increasing absorption torque of the hydraulic pump by operating at least the latter one (i.e., the pump discharge pressure increasing device) of the pump displacement adjusting device and the pump discharge pressure increasing device when the exhaust resistance detected by the exhaust resistance sensor has reached or exceeded the set value.

In the present invention configured as above, when the exhaust resistance detected by the exhaust resistance sensor has reached or exceeded the set value, the exhaust gas temperature is increased so as to make the exhaust gas temperature detected by the exhaust temperature sensor reach the preset value by operating at least the pump discharge pressure increasing device. Therefore, the recovery process of the exhaust gas purification device can be executed with reliability by increasing the exhaust gas temperature irrespective of the operating environment and the economic efficiency can be improved by keeping the fuel consumption at a minimum necessary level.

(2) In order to achieve the above second object, in an invention described in claim 2, the exhaust temperature increasing control device in the exhaust gas purification system according to claim 1 controls an operation amount of at least the latter one of the pump displacement adjusting device and the pump discharge pressure increasing device so that an increment of the absorption torque of the hydraulic pump amounts to 20% - 30% of maximum torque of the engine.

The present inventors have confirmed that the exhaust gas temperature can be increased to approximately 250°C - 350°C without causing any problem to the operation of the hydraulic operating machine driving hydraulic actuators if the hydraulic absorption torque generated by the pump displacement adjusting device and the pump discharge pressure increasing device is approximately 20% - 30% of the maximum torque of the engine. The present invention has been made based on these findings. By controlling at least the operation amount of the pump discharge pressure increasing device so that the increment of the absorption torque of the hydraulic pump amounts to 20% - 30% of the maximum torque of the engine, unnecessary and excessive increase in the exhaust gas temperature can be avoided, the fuel consumption can be kept at a minimum necessary level, and the economic efficiency can be improved. Further, even in an operating state (in which the operator is operating the machine), the recovery process of the exhaust gas purification device can be performed by increasing the exhaust gas temperature by the exhaust temperature increasing control without causing any problem to the operation of the hydraulic operating machine. Consequently, working efficiency can be increased through the improvement of workability during the execution of the recovery control and the reduction of the operation interruption frequency of the hydraulic operating machine.

(3) In an invention described in claim 3, in the exhaust gas purification system according to claim 1 or 2, the exhaust temperature increasing control device includes an exhaust temperature adjusting device which adjusts at least one selected from an operation amount of the pump displacement adjusting device, an operation amount of the pump discharge pressure increasing device and an increment of revolution speed of the engine so that the exhaust gas temperature remains within a preset range after the exhaust gas temperature detected by the exhaust temperature sensor has been increased to the preset value.

With this configuration, the exhaust gas temperature T can be reliably controlled and kept within the preset temperature range. Consequently, ill effect on the operation can be minimized in the recovery control in the operating state. In the recovery control in the non-operating state, unnecessary increase in the engine load can be avoided, the fuel consumption can be kept at a minimum necessary level, and the economic efficiency can be improved.

(4) In an invention described in claim 4, in the exhaust gas purification system according to any one of claims 1 - 3, the recovery control device is an automatic recovery control device which automatically starts operation when the exhaust resistance detected by the exhaust resistance sensor has reached or exceeded the set value.

With this configuration, the recovery process of the exhaust gas purification device can be executed with reliability by increasing the exhaust gas temperature even in low-load operation in the operating state.

(5) In an invention described in claim 5, the exhaust gas purification system according to claim 4 further comprises operation detecting means for detecting whether the hydraulic actuator is being driven or not. The exhaust temperature increasing control device increases the exhaust gas temperature by increasing the absorption torque of the hydraulic pump by operating at least the latter one of the pump displacement adjusting device and the pump discharge pressure increasing device when the hydraulic actuator is being driven.

With this configuration, the recovery process of the exhaust gas purification device can be executed with reliability by increasing the exhaust gas temperature even in low-load operation in the operating state.

(6) In an invention described in claim 6, in the exhaust gas purification system according to claim 5, when the hydraulic actuator is not being driven, the exhaust temperature increasing control device increases the exhaust gas temperature by increasing revolution speed of the engine to a preset revolution speed and increasing the absorption torque of the hydraulic pump by operating the pump displacement adjusting device and the pump discharge pressure increasing device.

With this configuration, the recovery process of the exhaust gas purification device can be executed with reliability even in the non-operating state by securely increasing the exhaust gas temperature by the combination of the absorption torque increasing control of the hydraulic pump and the engine revolution speed increasing control.

(7) In an invention described in claim 7, the exhaust gas purification system according to any one of claims 1 - 3 further comprises: operation permission state detecting means for detecting whether the hydraulic operating machine is in an operation permission state or not; and manual recovery instruction means. The recovery control device is a manual recovery control device which issues an alarm when the exhaust resistance detected by the exhaust resistance sensor has reached or exceeded a second set value and starts operation when the operation permission state detecting means detects that the hydraulic operating machine is not in the operation permission state and there is an instruction by the manual recovery instruction means. The exhaust temperature increasing control device increases the exhaust gas temperature by increasing revolution speed of the engine to a preset revolution speed and increasing the absorption torque of the hydraulic pump by operating the pump displacement adjusting device and the pump discharge pressure increasing device.

With this configuration, also in the manual recovery control, the recovery process of the exhaust gas purification device can be executed with reliability by increasing the exhaust gas temperature irrespective of the operating environment and the economic efficiency can be improved by keeping the fuel consumption at a minimum necessary level.

(8) In an invention described in claim 8, in the exhaust gas purification system according to any one of claims 4 - 6, the exhaust temperature increasing control device previously stores an exhaust resistance threshold value, for judging whether the recovery of the exhaust gas purification device by the automatic recovery control device is necessary or not, as a function of engine revolution speed and an engine load, determines the exhaust resistance threshold value by referring to current engine revolution speed and engine load and inputting them to the function, and sets the determined exhaust resistance threshold value as the set value.

With this configuration, an appropriate value incorporating the operating status of the engine can be set as the set value, by which proper recovery control can be performed.

(9) In an invention described in claim 9, in the exhaust gas purification system according to claim 4, the automatic recovery control device sets the set value of the exhaust resistance at a lower value when the hydraulic actuator is not being driven compared to cases where the hydraulic actuator is being driven.

With this configuration, in the non-operating state (when the hydraulic actuator is not being driven) in which the exhaust gas temperature is relatively low and the particulate matter (PM) tends to accumulate relatively more, the PM accumulated in the exhaust gas purification device can be combusted more frequently than in the operating state (when the hydraulic actuator is being driven) and the exhaust gas purification device can be recovered efficiently.

(10) In an invention described in claim 10, in the exhaust gas purification system according to any one of claims 1 - 3, the recovery control device includes an automatic recovery control device (20, 20A) which automatically starts operation when the exhaust resistance detected by the exhaust resistance sensor has reached or exceeded the set value and a manual recovery control device (36, 20, 20A) which issues an alarm when the exhaust resistance detected by the exhaust resistance sensor (34) has reached or exceeded the set value and starts operation when the operation permission state detecting means detects that the hydraulic operating machine is not in the operation permission state and there is an instruction by the manual recovery instruction means. The set value in the automatic recovery control device (20, 20A) is set lower than the set value in the manual recovery control device (36, 20, 20A).

By setting the set value in the automatic recovery control device lower than the set value in the manual recovery control device as above, the frequency of the automatic recovery control increases and the frequency of the manual recovery control decreases due to the output value of the exhaust resistance sensor increasing to the second set value less frequently. Consequently, the operation interruption frequency of the hydraulic operating machine can be reduced.

### Effect of the Invention

According to the present invention, the recovery process of the exhaust gas purification device can be executed with reliability by increasing the exhaust gas temperature irrespective of the operating environment and the economic efficiency can be improved by keeping the fuel consumption at a minimum necessary level.

According to the present invention, the recovery process of the exhaust gas purification device can be executed with reliability by increasing the exhaust gas temperature irrespective of the operating environment, the economic efficiency can be improved by keeping the fuel consumption at a minimum necessary level, and the working efficiency can be increased through the improvement of workability during the execution of the recovery control and the reduction of the operation interruption frequency of the hydraulic operating machine.

### Brief Description of the Drawings

Fig. 1 is a schematic diagram showing a hydraulic driving system of a hydraulic operating machine equipped with an exhaust gas purification system in accordance with a first embodiment of the present invention.
Fig. 2 is a flow chart showing the contents of a calculation process for positive control and pump torque limiting control executed by a controller.
Fig. 3 is a graph showing an absorption torque property of a hydraulic pump acquired as a result of pump torque limiting control.
Fig. 4 is a schematic diagram showing the external appearance of a hydraulic shovel as an example of the hydraulic operating machine equipped with the hydraulic driving system and the exhaust gas purification system shown in Fig. 1.
Fig. 5 is a flow chart showing the overall process flow of automatic recovery control when the hydraulic operating machine is in an operation permission state.
Fig. 6 is a flow chart showing the contents of the automatic recovery control when the hydraulic operating machine is in the operation permission state and in an operating state.
Fig. 7 is a flow chart showing the contents of the automatic recovery control when the hydraulic operating machine is in the operation permission state and in a non-operating state.
Fig. 8 is a flow chart showing the contents of manual recovery control when the hydraulic operating machine is in an operation prohibition state.
Fig. 9 is a graph showing the relationship between the amount of PM accumulated on a filter in an exhaust gas purification device and the exhaust resistance of the filter (differential pressure across the filter) at the rated engine revolution speed and the maximum engine load.
Fig. 10 is a graph showing changes in the relationship between the PM accumulation amount and the exhaust resistance shown in Fig. 9 depending on the engine revolution speed and the engine load.
Fig. 11 is a flow chart showing the contents of exhaust gas temperature increasing control (step S312 in Fig. 6).
Fig. 12 is a flow chart showing the contents of a process including exhaust gas temperature increasing control (step S412 in Fig. 7).
Fig. 13 is a schematic diagram showing a hydraulic driving system of a hydraulic operating machine equipped with an exhaust gas purification system in accordance with a second embodiment of the present invention.
Fig. 14 is a flow chart showing the contents of a calculation process for the positive control of the hydraulic pump executed by a controller.
Fig. 15 is a graph like Fig. 3 showing the absorption torque property of the hydraulic pump acquired as a result of the pump torque limiting control.
Fig. 16 is a flow chart showing the details of the hydraulic absorption torque increasing control in the step S312 in Fig. 6 regarding the automatic recovery control in the operating state.
Fig. 17 is a flow chart (corresponding to Fig. 6 in the first embodiment) showing the contents of the automatic recovery control in the operating state executed by an exhaust gas purification system in accordance with a third embodiment of the present invention.
Fig. 18 is a flow chart (corresponding to Fig. 7 in the first embodiment) showing the contents of the automatic recovery control in the non-operating state executed by the exhaust gas purification system of the third embodiment of the present invention.
Fig. 19 is a flow chart (corresponding to Fig. 8 in the first embodiment) showing the contents of the manual recovery control executed by the exhaust gas purification system of the third embodiment of the present invention when the hydraulic operating machine is in the operation prohibition state.

### Mode for Carrying out the Invention

Referring now to the drawings, a description will be given in detail of preferred embodiments in accordance with the present invention.

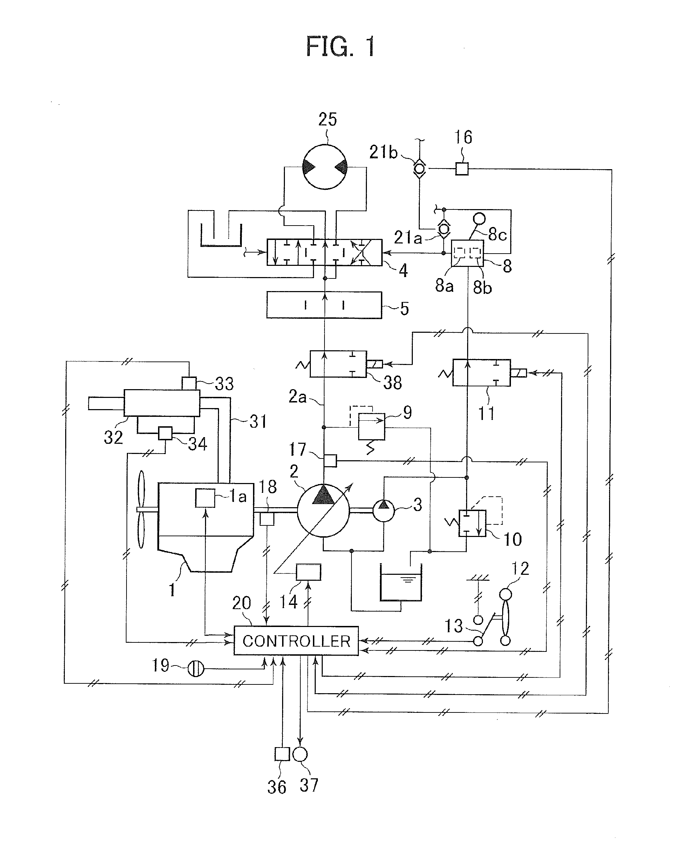

Fig. 1 is a schematic diagram showing a hydraulic driving system of a hydraulic operating machine equipped with an exhaust gas purification system in accordance with a first embodiment of the present invention.

In Fig. 1, the hydraulic driving system comprises a diesel engine (hereinafter properly abbreviated as an "engine") 1, a main hydraulic pump 2 of the variable displacement type, a pilot pump 3, a hydraulic actuator 25, flow/directional control valves 4 and 5, a control lever device 8 and a main relief valve 9. The hydraulic pump 2 and the pilot pump 3 are driven by the engine 1. The hydraulic actuator 25 is driven by hydraulic fluid (oil) discharged from the hydraulic pump 2. The flow/directional control valve 4 controls the flow rate and the direction of the hydraulic fluid supplied from the hydraulic pump 2 to the hydraulic actuator 25. The flow/directional control valve 5 controls the flow rate and the direction of hydraulic fluid supplied from the hydraulic pump 2 to other hydraulic actuators (not shown). The control lever device 8 is used for operating the hydraulic actuator 25. The main relief valve 9 regulates the maximum pressure of a discharging hydraulic line of the hydraulic pump 2.

The control lever device 8 includes pilot valves (pressure reducing valves) 8a and 8b, to which hydraulic fluid is supplied from the pilot pump 3. The discharge pressure of the pilot pump 3 is controlled by a pilot relief valve 10 at a constant level. When a control lever 8c of the control lever device 8 is operated, either the pilot valve 8a or the pilot valve 8b moves depending on the direction and the amount of the operation, by which operating pilot pressure is generated. By the operating pilot pressure, a spool of the flow/directional control valve 4 is slid and the hydraulic actuator 25 is operated.

The hydraulic driving system further comprises a pilot cut valve 11, a safety lever 12, a switch 13, a regulator 14, pressure sensors 16 and 17, a revolution sensor 18, an engine control dial 19 and a controller 20. The pilot cut valve 11 is attached to a discharging hydraulic line of the pilot pump 3. The safety lever 12 (called "gate lock lever") is placed at the entrance to the operator's seat. The switch 13 (operation permission state detecting means) operates in conjunction with the safety lever 12. The regulator 14 (pump displacement adjusting device) adjusts the tilting angle (capacity or displacement volume) of the hydraulic pump 2. The pressure sensor 16 (operation detecting means) detects the operating pilot pressure generated by the pilot valves 8a and 8b as the operation amount of the control lever device 8. The pressure sensor 17 detects the discharge pressure of the hydraulic pump 2. The revolution sensor 18 detects the revolution speed of the engine 1. The engine control dial 19 outputs an instruction signal which specifies a target revolution speed of the engine 1.

A plurality of shuttle valves (including shuttle valves 21a and 21b) are arranged along signal paths for the pressure sensor 16 for detecting the operating pilot pressure. When the operating pilot pressure is generated by either the pilot valve 8a or 8b, the operating pilot pressure is lead to the pressure sensor 16 via the shuttle valves 21a and 21b and is detected by the pressure sensor 16. Also when a control lever device for another actuator (not shown) is operated and operating pilot pressure is generated accordingly, the operating pilot pressure is lead to the pressure sensor 16 via a shuttle valve (not shown) and the shuttle valve 21b and is detected by the pressure sensor 16.

When the hydraulic actuator 25 is operated, the controller 20 detects the operation amount of the control lever device 8 and the engine revolution speed at that time with the pressure sensor 16 and the revolution sensor 18, respectively, calculates a target tilting angle of the hydraulic pump 2 through a calculation process for positive control and pump torque limiting control (also called "pump horsepower control"), and changes the tilting angle of the hydraulic pump 2 by controlling the regulator 14 to achieve the target tilting angle.

The safety lever 12 can be operated to an operation permission position and an operation prohibition position. The switch 13 remains in an ON state when the safety lever 12 is at the operation permission position, and in an OFF state when the safety lever 12 is at the operation prohibition position. The controller 20 detects the ON/OFF state of the switch 13 operating in conjunction with the safety lever 12 as above and opens the pilot cut valve 11 to supply the hydraulic fluid to the pilot valves 8a and 8b of the control lever device 8 only when the safety lever 12 is at the operation permission position (only when the switch 13 is ON).

Further, the instruction signal from the engine control dial 19 is inputted to the controller 20. The controller 20 controls the revolution speed and torque of the engine 1 by controlling an electronic governor 1a (which controls the fuel injection quantity of the engine 1) according to the instruction signal and the measurement value of the revolution sensor 18 (current engine revolution speed).

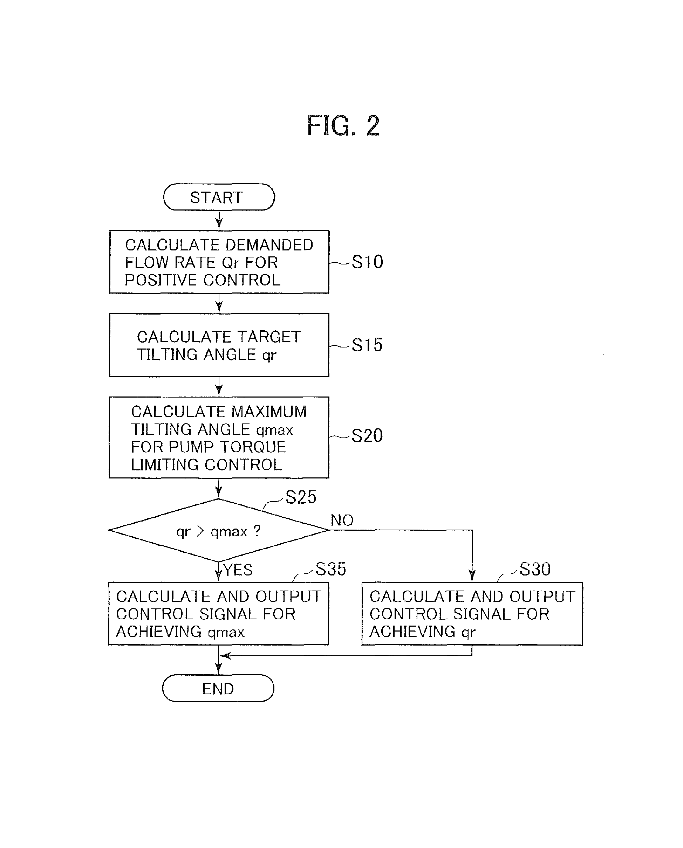

The contents of the calculation process for the positive control and the pump torque limiting control of the hydraulic pump 2 executed by the controller 20 will be explained below referring to Fig. 2. Fig. 2 is a flow chart showing the contents of the calculation process for the positive control and the pump torque limiting control executed by the controller 20.

First, the controller 20 calculates a demanded flow rate Qr for the positive control by detecting the operation amount of the control lever device 8 with the pressure sensor 16 (step S10). This calculation is executed by multiplying the measurement value of the pressure sensor 16 by a prescribed demanded flow rate conversion factor, for example. Subsequently, the controller 20 calculates the target tilting angle qr of the hydraulic pump 2 necessary for making the hydraulic pump 2 discharge the demanded flow rate Qr (step S15). This calculation is executed by dividing the demanded flow rate Qr by the revolution speed of the hydraulic pump 2 and multiplying the quotient by a prescribed conversion factor. The revolution speed of the hydraulic pump 2 is determined from the measurement value of the revolution sensor 18. Subsequently, the controller 20 calculates a maximum tilting angle qmax of the hydraulic pump 2 for the pump torque limiting control according to the discharge pressure Pp of the hydraulic pump 2 inputted from the pressure sensor 17 (step S20). This calculation is executed by previously setting a constant maximum absorption torque property of the hydraulic pump 2, checking the discharge pressure Pp of the hydraulic pump 2 with the property, and thereby determining a corresponding tilting angle (maximum tilting angle). Subsequently, the controller 20 compares the target tilting angle qr with the maximum tilting angle qmax (step S25). When the target tilting angle qr is less than the maximum tilting angle qmax, the controller 20 calculates a control signal for achieving the target tilting angle qr and outputs the control signal to the regulator 14 (step S30). In contrast, when the target tilting angle qr is the maximum tilting angle qmax or greater, the controller 20 calculates a control signal for achieving the maximum tilting angle qmax and outputs the control signal to the regulator 14 (step S35). With the control signal, when the target tilting angle qr of the hydraulic pump 2 is less than the maximum tilting angle qmax, the regulator 14 changes the tilting angle of the hydraulic pump 2 so as to achieve the target tilting angle qr (positive control). When the target tilting angle qr of the hydraulic pump 2 is the maximum tilting angle qmax or greater, the regulator 14 changes the tilting angle of the hydraulic pump 2 so as to limit the tilting angle to the maximum tilting angle qmax (pump torque limiting control or pump horsepower control).

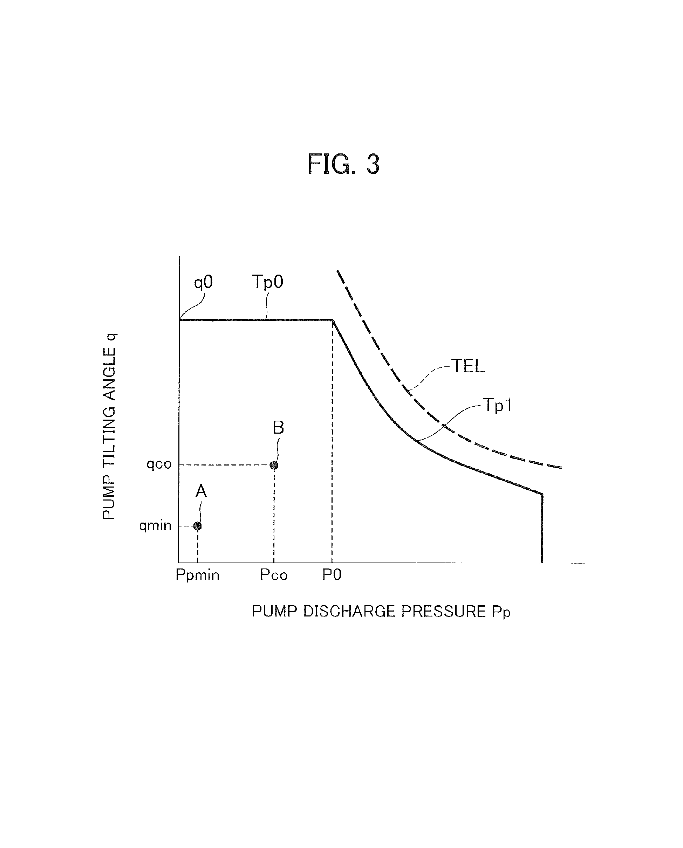

Fig. 3 is a graph showing an absorption torque property of the hydraulic pump 2 acquired as a result of the pump torque limiting control, wherein the horizontal axis represents the discharge pressure Pp of the hydraulic pump 2 and the vertical axis represents the tilting angle (displacement) q of the hydraulic pump 2.

In Fig. 3, the absorption torque property of the hydraulic pump 2 is made up of a constant maximum tilting angle property line Tp0 and a constant maximum absorption torque property line Tp1.

When the discharge pressure P of the hydraulic pump 2 is not higher than a first value P0 defined as the pressure at the turning point (transition point) from the constant maximum tilting angle property line Tp0 to the constant maximum absorption torque property line Tp1, the maximum tilting angle (maximum displacement) qmax of the hydraulic pump 2 remains at a constant value q0 (which is determined by the mechanism of the hydraulic pump 2) even with the increase in the discharge pressure P of the hydraulic pump 2. In this case, the maximum absorption torque of the hydraulic pump 2 (product of the pump discharge pressure and the pump tilting angle) increases with the increase in the discharge pressure P of the hydraulic pump 2. As the discharge pressure P of the hydraulic pump 2 increases over the first value P0, the maximum tilting angle qmax of the hydraulic pump 2 decreases along the constant maximum absorption torque property line Tp1 and the absorption torque of the hydraulic pump 2 is kept at maximum torque Tmax which is determined by the property line Tp1. This is a control part corresponding to the aforementioned steps S25 and S35. Here, the property line Tp1 is a part of a hyperbolic curve and the maximum torque Tmax determined by the property line Tp1 has been set slightly lower than limit torque TEL of the engine 1. With this setting, when the discharge pressure P of the hydraulic pump 2 increases over the first value P0, the absorption torque (input torque) of the hydraulic pump 2 is controlled so as not to exceed the preset maximum torque Tmax (so as not to exceed the limit torque TEL of the engine 1) by decreasing the maximum tilting angle qmax of the hydraulic pump 2.

The exhaust gas purification system in accordance with this embodiment is installed in such a hydraulic driving system. The exhaust gas purification system comprises an exhaust gas purification device 32 placed in an exhaust line 31 constituting the exhaust system of the engine 1, an exhaust temperature sensor 33 placed at the inlet of the exhaust gas purification device 32 for detecting the temperature of the exhaust gas inside the exhaust gas purification device, an exhaust resistance sensor 34 for detecting exhaust resistance of a filter inside the exhaust gas purification device 32, a manual recovery switch 36 used for instructing the exhaust gas purification system (controller 20) to start manual recovery control, and an alarm lamp 37 for informing the operator that the a manual recovery process is necessary. Output values of the sensors/switch are inputted to the controller 20. The exhaust gas purification system further comprises a solenoid proportional valve 38 (pump discharge pressure increasing device) provided in the discharging hydraulic line 2a of the hydraulic pump 2. The solenoid proportional valve 38 is a variable throttle valve which changes its opening area according to instruction current supplied to its solenoid. The solenoid proportional valve 38 stays at the full open position shown in the figure when the instruction current is minimum (OFF), decreases the opening area with the increase in the instruction current, and minimizes the opening area (totally closed state) when the instruction current is maximum.

The exhaust gas purification device 32 includes the filter, with which particulate matter (PM) contained in the exhaust gas is collected. The exhaust gas purification device 32 is also equipped with an oxidation catalyst. When the exhaust gas temperature exceeds a prescribed temperature, the oxidation catalyst is activated and causes combustion of unburned fuel added to the exhaust gas, an increase in the exhaust gas temperature, and combustion of the collected PM accumulated on the filter.

Specifically, the exhaust gas purification device 32 is equipped with a filter with an oxidation catalyst and another oxidation catalyst placed upstream of the filter, for example. In this case, the prescribed temperature (recovery start temperature) for the activation of the oxidation catalyst is approximately 250°C, for example. When the exhaust gas temperature exceeds approximately 250°C, the oxidation catalyst is activated and the collected PM accumulated on the filter is combusted. The exhaust gas purification device 32 may also be implemented by the filter with the oxidation catalyst only. In this case, the prescribed temperature (recovery start temperature) for the activation of the oxidation catalyst is approximately 350°C, for example.

The exhaust resistance sensor 34 is a differential pressure detecting device for detecting the differential pressure between the upstream side and the downstream side of the filter of the exhaust gas purification device 32 (pressure loss of the filter), for example.

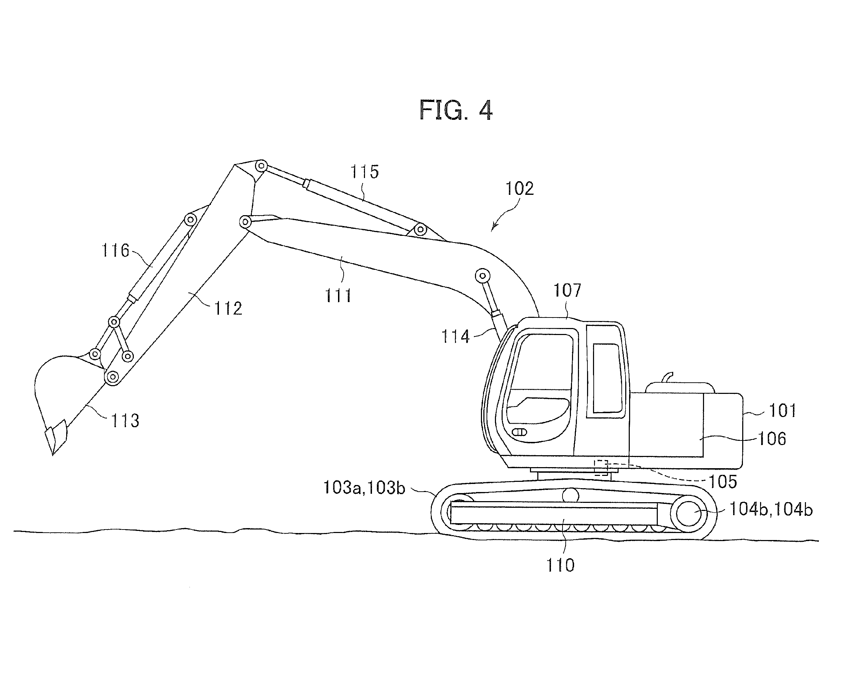

Fig. 4 is a schematic diagram showing the external appearance of a hydraulic shovel as an example of the hydraulic operating machine equipped with the hydraulic driving system and the exhaust gas purification system shown in Fig. 1.

The hydraulic shovel comprises a lower travel structure 100, an upper swing structure 101 and a front work implement 102. The lower travel structure 100 is equipped with right and left crawler travel devices 103a and 103b, which are driven by right and left travel motors 104a and 104b, respectively. The upper swing structure 101 is mounted on the lower travel structure 100 so that it can be swiveled by a swing motor 105. The front work implement 102 is attached to the front part of the upper swing structure 101 so that it can be elevated and lowered. The upper swing structure 101 includes an engine room 106 and a cab 107. The engine 1 is installed in the engine room 106. The safety lever (gate lock lever) 12 is placed in the cab 107 at a position close to the entrance to the operator's seat. The control lever devices are arranged to the right and left of the operator's seat.

The front work implement 102 is an articulated structure including a boom 111, an arm 112 and a bucket 113. The boom 111 is rotated and moved in the vertical direction by the expansion and contraction of a boom cylinder 114. The arm 112 is rotated and moved in the vertical direction and the front-to-back direction by the expansion and contraction of an arm cylinder 115. The bucket 113 is rotated and moved in the vertical direction and the front-to-back direction by the expansion and contraction of a bucket cylinder 116.

In Fig. 1, the hydraulic actuator 25 corresponds to the swing motor 105, for example, and the control lever device 8 corresponds to one of the control lever devices arranged to the right and left of the operator's seat. Other hydraulic actuators and control valves (the travel motors 104a and 104b, the boom cylinder 114, the arm cylinder 115, the bucket cylinder 116, etc.) are not shown in Fig. 1.

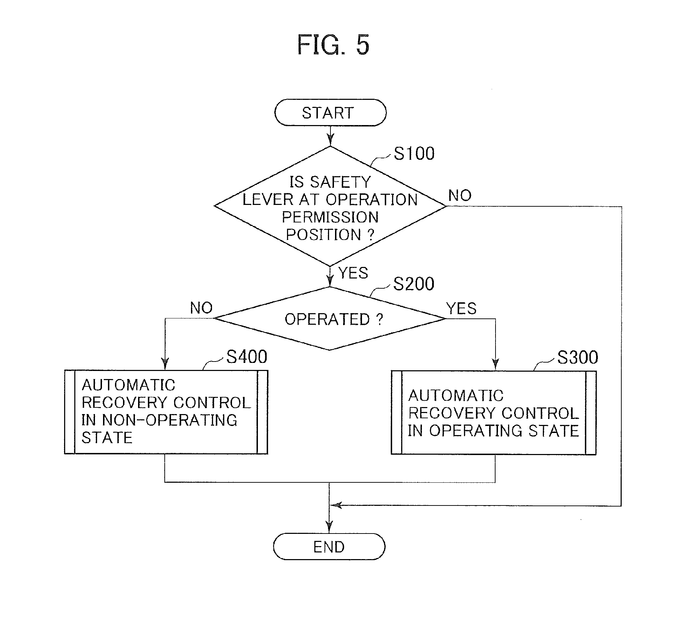

Next, the operation of the exhaust gas purification system of this embodiment will be described below while explaining a process executed by the controller 20 with reference to Figs. 5 - 8.

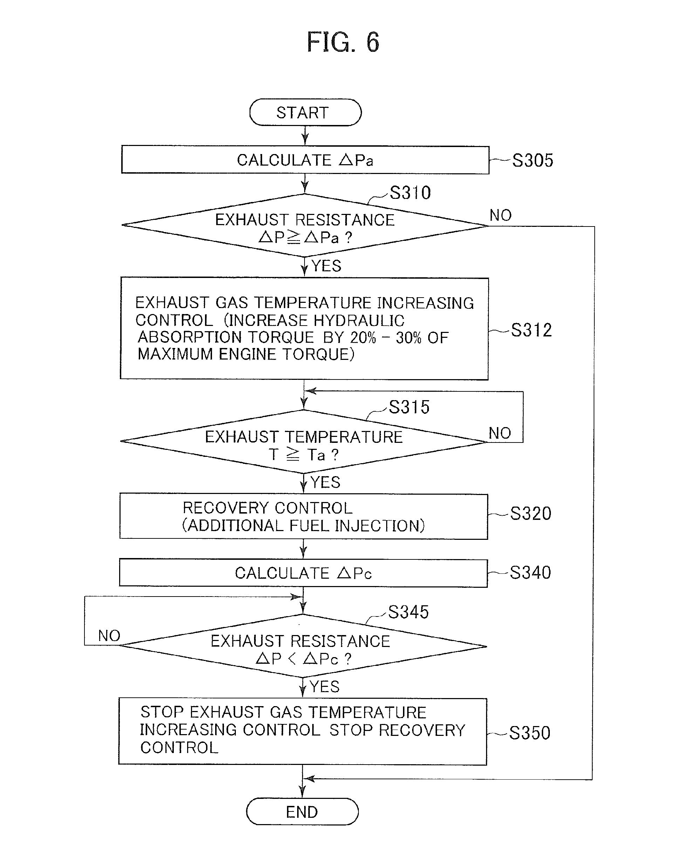

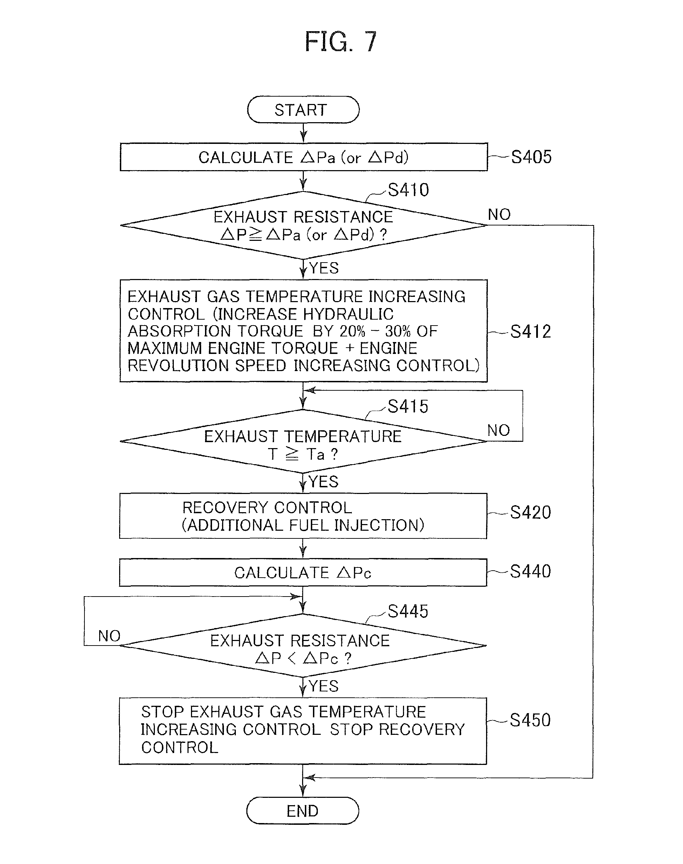

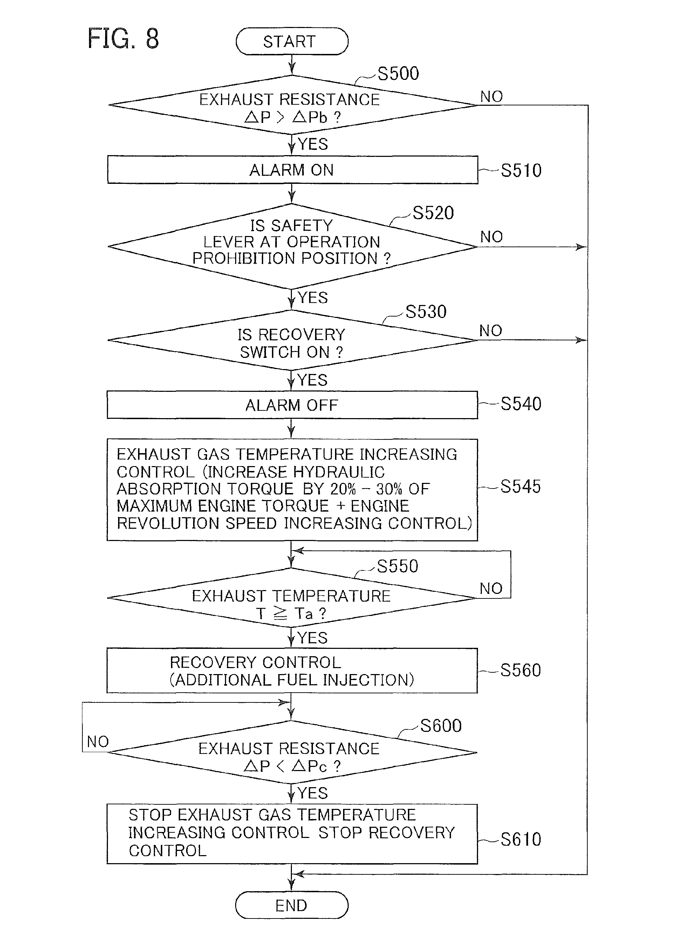

Figs. 5 - 8 are flow charts showing the contents of a filter recovery calculation process executed by the controller 20. Fig. 5 shows the overall process flow of automatic recovery control when the hydraulic operating machine (hereinafter referred to simply as a "machine") is in an operation permission state. Fig. 6 shows the contents of the automatic recovery control when the machine is in the operation permission state and in an operating state (i.e., when the operator is operating the machine). Fig. 7 shows the contents of the automatic recovery control when the machine is in the operation permission state and in a non-operating state (i.e., when the operator is not operating the machine). Fig. 8 shows the contents of the manual recovery control when the machine is in an operation prohibition state. Each of the processes of Figs. 5 - 8 is executed repeatedly at preset periods (control cycles).

First, the overall process flow of the automatic recovery control when the machine is in the operation permission state will be explained referring to Fig. 5.

The controller 20 first judges whether the safety lever 12 is at the operation permission position or not by detecting whether the switch 13 operating in conjunction with the safety lever 12 is in the ON state or not (step S100). When the switch 13 is in the OFF state, that is, when the safety lever 12 is not at the operation permission position (i.e., at the operation prohibition position), the machine is in the operation prohibition state. In this case, the process in the current control cycle is ended without any further processing. When the switch 13 is in the ON state, that is, when the safety lever 12 is at the operation permission position, the machine is in the operation permission state. In this case, the process advances to the next step.

In the next step, the controller 20 judges whether any one of the control lever devices is being operated by the operator or not by detecting the output pressures of all the control lever devices (including the control lever device 8) based on the output values of the pressure sensor 16 and checking whether each of the output pressures is at a level indicating the operator's operation to a corresponding control lever device or not (step S200). When any one of the control lever devices is being operated by the operator, the machine is being operated (operating state). In this case, the controller 20 executes automatic recovery control in the operating state (step S300). When none of the control lever devices is being operated by the operator, the machine is not being operated (non-operating state). In this case, the controller 20 executes automatic recovery control in the non-operating state (step S400).

The details of the automatic recovery control in the operating state will be explained referring to Fig. 6.

First, the controller 20 calculates an exhaust resistance threshold value ΔPa for judging whether the automatic recovery control is necessary or not and sets the calculated exhaust resistance threshold value ΔPa as a first set value (step S305).

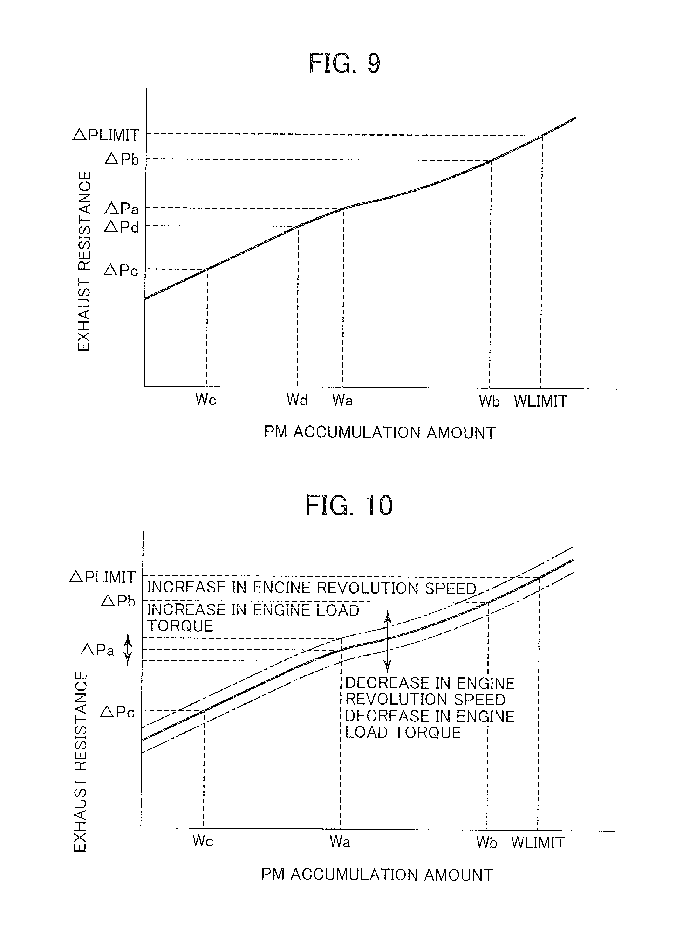

Here, the exhaust resistance threshold value ΔPa for judging whether the automatic recovery control is necessary or not will be explained referring to Figs. 9 and 10.

Fig. 9 is a graph showing the relationship between the amount of PM accumulated on the filter in the exhaust gas purification device 32 and the exhaust resistance of the filter (differential pressure across the filter) at the rated engine revolution speed and the maximum engine load. Fig. 10 is a graph showing changes in the relationship between the PM accumulation amount and the exhaust resistance depending on the engine revolution speed and the engine load.

Referring to Fig. 9, the differential pressure across the filter increases with the increase in the PM accumulation amount of the filter. In Fig. 9, "ΔPLIMIT" represents the exhaust resistance at a limit accumulation amount WLIMIT of the PM (limit exhaust resistance). The limit accumulation amount WLIMIT means an accumulation amount at which further PM accumulation on the filter can cause abnormal combustion. "ΔPb" represents an exhaust resistance threshold value (second set value) at a PM accumulation amount Wb for judging whether the manual recovery control is necessary or not. This threshold value is set as close to the PM exhaust resistance ΔPLIMIT as possible. "ΔPc" represents an exhaust resistance threshold value at a PM accumulation amount Wc for judging whether the recovery control should be ended or not. An exhaust resistance threshold value ΔPa at a PM accumulation amount Wa, for judging whether the automatic recovery control is necessary or not, has been set at a value lower than the threshold value (second set value) ΔPb for the manual recovery control. For example, the threshold value ΔPa has been set at approximately 40% - 60% of the threshold value ΔPb (ΔPa < ΔPb).

The relationship between the PM accumulation amount and the exhaust resistance shown in Fig. 9 is that at the rated engine revolution speed and the maximum engine load. The relationship changes depending on the engine revolution speed and the engine load as shown in Fig. 10. Specifically, even if the PM accumulation amount of the filter remains constant, an increase in the engine revolution speed or the engine load causes an increase in the exhaust resistance of the filter since the fuel injection quantity of the electronic governor 1a increases correspondingly and the flow rate of the exhaust gas increases. Inversely, a decrease in the engine revolution speed or the engine load causes a decrease in the exhaust resistance of the filter since the fuel injection quantity of the electronic governor 1a decreases correspondingly and the flow rate of the exhaust gas decreases. Consequently, the relationship between the PM accumulation amount and the exhaust resistance changes as shown in Fig. 10 in response to the increase/decrease in the engine revolution speed or the engine load.

The controller 20 previously stores the exhaust resistance threshold value ΔPa (for judging whether the automatic recovery control is necessary or not) as a function of the engine revolution speed and the engine load based on the relationships between the PM accumulation amount and the exhaust resistance like those shown in Fig. 10. In the step S305, the controller 20 determines the exhaust resistance threshold value ΔPa by referring to the current engine revolution speed and the current engine load and inputting them to the function. The measurement value of the revolution sensor can be used as the current engine revolution speed, and a target fuel injection quantity (as an internal value of the electronic governor 1a) can be used as the current engine load. It is also possible to calculate the absorption torque of the hydraulic pump 2 from the tilting angle and the discharge pressure of the hydraulic pump 2 and use the calculated absorption torque as the engine load.

By determining the exhaust resistance threshold value ΔPa (for judging whether the automatic recovery control is necessary or not) by calculation and setting the threshold value ΔPa as the first set value as explained above, an appropriate threshold value ΔPa incorporating the operating status of the engine can be set and the recovery control can be started properly.

In the next step, the controller 20 detects the exhaust resistance ΔP of the filter in the exhaust gas purification device 32 based on the output value of the exhaust resistance sensor 34 and then judges whether or not the exhaust resistance ΔP is the first set value ΔPa or higher (step S310). When the exhaust resistance ΔP is less than the first set value ΔPa, the controller 20 ends the process in the current control cycle without any further processing since the PM accumulation has not proceeded to the point at which the filter of the exhaust gas purification device 32 needs the recovery by the automatic recovery control. When the exhaust resistance ΔP is the first set value ΔPa or higher, the process advances to the next step.

In the next step, the controller 20 starts the automatic recovery control.

At the start of the automatic recovery control, exhaust gas temperature increasing control is executed (step S312). In the exhaust gas temperature increasing control, hydraulic absorption torque increasing control is carried out. Specifically, the discharge pressure of the hydraulic pump 2 is increased by operating the solenoid proportional valve 38 and reducing its opening area. Further, the discharge flow rate of the hydraulic pump 2 is raised by increasing the tilting angle (displacement) of the hydraulic pump 2. By increasing the discharge pressure and the tilting angle (displacement) of the hydraulic pump 2, the absorption torque of the hydraulic pump 2 (hydraulic absorption torque) is increased and the engine load is increased. The increment of the absorption torque of the hydraulic pump 2 in this case is 20% - 30% (preferably, about 30%) of the maximum torque of the engine 1. With this setting, the engine 1 injects a correspondingly larger amount of fuel, by which the exhaust gas temperature can be increased.

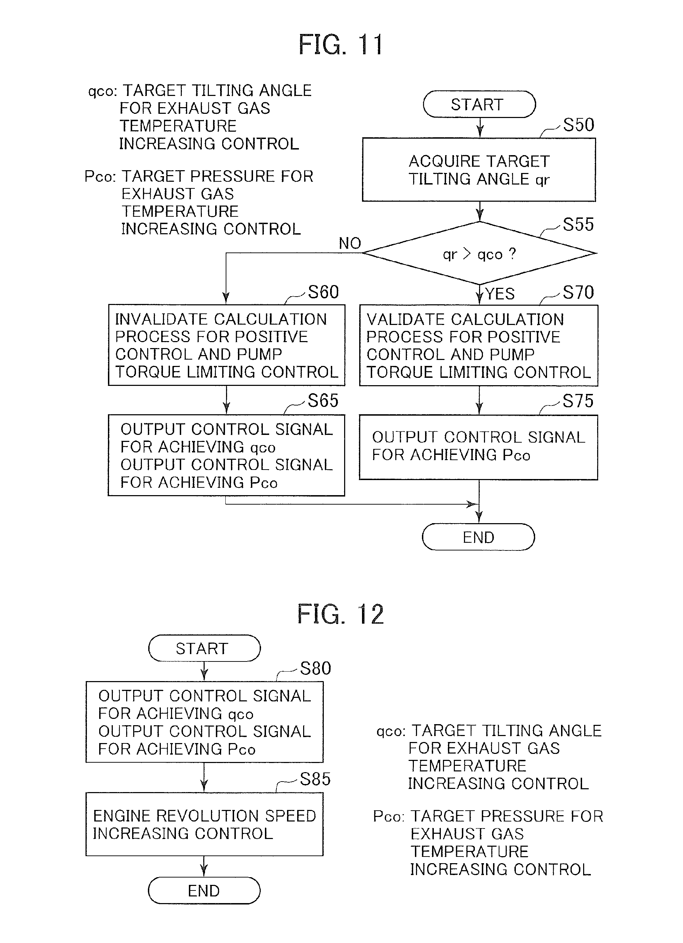

The details of the hydraulic absorption torque increasing control (step S312) will be explained referring to Fig. 11. Fig. 11 is a flow chart showing the contents of the hydraulic absorption torque increasing control.

First, the controller 20 acquires the target tilting angle qr of the hydraulic pump 2 calculated in the step S15 in Fig. 2 (step S50). A target tilting angle qco and a target pressure Pco for the hydraulic absorption torque increasing control have previously been set to the controller 20. The controller 20 compares the target tilting angle qr for the positive control with the target tilting angle qco for the hydraulic absorption torque increasing control (step S55). When the target tilting angle qr for the positive control is less than or equal to the target tilting angle qco for the hydraulic absorption torque increasing control, the controller 20 invalidates the calculation process for the positive control and the pump torque limiting control in the flow chart of Fig. 2 (step S60). Subsequently, the controller 20 calculates a control signal for achieving the target tilting angle qco for the hydraulic absorption torque increasing control and a control signal for achieving the target pressure Pco for the hydraulic absorption torque increasing control, outputs the former control signal to the regulator 14, and outputs the latter control signal to the solenoid proportional valve 38 (step S65). In contrast, when the target tilting angle qr for the positive control is greater than the target tilting angle qco for the hydraulic absorption torque increasing control, the controller 20 validates the calculation process for the positive control and the pump torque limiting control in the flow chart of Fig. 2 (step S70). Subsequently, the controller 20 calculates a control signal for achieving the target pressure Pco for the hydraulic absorption torque increasing control and outputs the control signal to the solenoid proportional valve 38 (step S75).

In Fig. 3, the point A is the operating point of the hydraulic pump 2 when the hydraulic absorption torque increasing control is not executed in the non-operating state. In the non-operating state in which no control lever device is being operated, the demanded flow rate for the positive control equals 0 and the hydraulic pump 2 is held at a minimum tilting angle qmin (point A). Further, in the non-operating state in which no control lever device is being operated, every flow/directional control valve 4, 5 is at the center valve position shown in the figure and the hydraulic pump 2 remains at a minimum discharge pressure Ppmin (point A). In Fig. 3, the point B is the operating point of the hydraulic pump 2 when the hydraulic absorption torque increasing control is executed in the non-operating state (explained later). Either in the non-operating state or in the operating state, the target tilting angle for the hydraulic absorption torque increasing control is set at qco and the target pressure is set at Pco. Thus, in the steps S65 and S75 in Fig. 11, the hydraulic absorption torque increasing control is carried out using the target tilting angle qco and the target pressure Pco at the point B.

In this case, the controller 20 controls the operation amounts of the regulator 14 and the solenoid proportional valve 38 by setting the target tilting angle qco and the target pressure Pco so that the increment of the absorption torque of the hydraulic pump 2 by the hydraulic absorption torque increasing control amounts to 20% - 30% (preferably, about 30%) of the maximum torque of the engine 1. In an examination conducted by the present inventors, it has been confirmed that even in low-load operation, the exhaust gas temperature can be raised to approximately 250°C when the hydraulic absorption torque is increased by approximately 20% of the maximum engine torque, and to approximately 350°C when the hydraulic absorption torque is increased by approximately 30% of the maximum engine torque. We have also confirmed that no problem in terms of operation occurs even if the machine is operated in the state in which the hydraulic absorption torque has been created by the solenoid proportional valve 38 as long as the increment is approximately 30% of the maximum engine torque.

Subsequently, the controller 20 judges whether or not the temperature T of the exhaust gas inside the exhaust gas purification device 32 is a preset threshold value Ta or higher based on the output value of the exhaust temperature sensor 33 (step S315). The judgment is repeated unless the exhaust gas temperature T is judged to be the threshold value Ta or higher. When the exhaust gas temperature T is judged to be the threshold value Ta or higher, the controller 20 starts the recovery control (step S320). The threshold value Ta may be set at, for example, approximately 250°C (activation temperature of the oxidation catalyst) in the case where the oxidation catalyst is placed upstream of the filter in the exhaust gas purification device 32. In the case where only the filter with an oxidation catalyst is arranged in the exhaust gas purification device 32, the threshold value Ta may be set at approximately 350°C (activation temperature of the oxidation catalyst), for example.

In the recovery control in the step S320, post-injection (additional injection) in the expansion stroke after the main injection of the engine is carried out by controlling the electronic governor 1a of the engine 1. By the post-injection, unburned fuel is introduced into the exhaust gas. The unburned fuel is combusted by the activated oxidation catalyst, by which the exhaust gas temperature is raised and the PM accumulated on the filter is combusted and removed by the high-temperature exhaust gas.

Subsequently, the controller 20 calculates and sets the exhaust resistance threshold value ΔPc for judging whether the recovery control should be ended or not (step S340). The idea for the calculation of the threshold value ΔPc is similar to that for the calculation of the threshold value ΔPa. Specifically, the controller 20 previously stores the exhaust resistance threshold value ΔPc (for judging whether the automatic recovery control should be ended or not) as a function of the engine revolution speed and the engine load based on the relationships between the PM accumulation amount and the exhaust resistance like those shown in Fig. 10. In the step S340, the controller 20 determines the exhaust resistance threshold value ΔPc by referring to the current engine revolution speed and the current engine load and inputting them to the function. By the above calculation and setting, an appropriate threshold value ΔPc incorporating the operating status of the engine can be set and the recovery control can be ended properly.

The exhaust gas temperature increasing control (hydraulic absorption torque increasing control) and the recovery control (additional fuel injection) are executed until the exhaust resistance ΔP of the exhaust gas purification device 32 falls below the threshold value ΔPc. When the exhaust resistance ΔP of the exhaust gas purification device 32 is judged to be below the threshold value ΔPc, the controller 20 ends the automatic recovery control, puts the solenoid proportional valve 38 in the full open state by stopping activating the valve, and thereby ends the exhaust gas temperature increasing control (hydraulic absorption torque increasing control) and the recovery control (additional fuel injection) (steps S320, S340, S345 and S350).

Next, the details of the automatic recovery control in the non-operating state will be explained referring to Fig. 7.

A hydraulic operating machine (hydraulic shovel) is generally equipped with an automatic idling function. The automatic idling function is a technique for reducing the engine revolution speed to an idling revolution speed a prescribed time period (e.g., 5 seconds) after the control lever 8c of the control lever device 8 is returned from its operating position to its neutral position. Thus, in the non-operating state, the engine 1 is mostly in the idling revolution state. Therefore, in the automatic recovery control in the non-operating state, the hydraulic absorption torque increasing control and an engine revolution speed increasing control are executed in the exhaust gas temperature increasing control (step S412). The increment of the absorption torque of the hydraulic pump 2 in the hydraulic absorption torque increasing control is 20% - 30% (preferably, about 30%) of the maximum torque of the engine 1 similarly to the case in the operating state. In the engine revolution speed increasing control, the engine revolution speed is increased to approximately 1700 rpm, for example.

Fig. 12 is a flow chart showing the contents of a process including the hydraulic absorption torque increasing control and the engine revolution speed increasing control executed in the step S412 in Fig. 7.

The controller 20 calculates the aforementioned control signal for achieving the target tilting angle qco for the hydraulic absorption torque increasing control and the aforementioned control signal for achieving the target pressure Pco for the hydraulic absorption torque increasing control, outputs the former control signal to the regulator 14, and outputs the latter control signal to the solenoid proportional valve 38 (step S80). According to the control signals, the hydraulic pump 2 operates at the operating point B shown in Fig. 3. The controller 20 also executes the engine revolution speed increasing control so as to increase the engine revolution speed to approximately 1700 rpm (step S85).

Returning to Fig. 7, steps S405, S410, S415, S420, S440, S445 and S450 are executed in the same way as the steps S305, S310, S315, S320, S340, S345 and S350 in Fig. 6.

Incidentally, the exhaust resistance threshold value (first set value) used for starting the automatic recovery control in the non-operating state may be set lower than the threshold value ΔPa which is used for starting the automatic recovery control in the operating state. In the steps S405 and S410 in Fig. 7, the threshold value set lower than ΔPa is expressed as "ΔPd" in parentheses (ΔPd < ΔPa). The threshold value ΔPd is indicated in Fig. 9 as the exhaust resistance at a PM accumulation amount Wd. By use of the threshold value ΔPd, in the non-operating state in which the exhaust gas temperature is relatively low and the PM tends to accumulate relatively more, the PM accumulated on the filter can be combusted more frequently than in the operating state and the filter can be recovered efficiently.

Further, the increment of the absorption torque of the hydraulic pump 2 (hydraulic absorption torque) in the hydraulic absorption torque increasing control in the step S412 may be set greater than 30% of the maximum engine torque (the increment in the operating state) since no problem occurs even if the absorption torque of the hydraulic pump 2 is increased greatly in the non-operating state. With such a setting, the speed of the exhaust gas temperature increasing control in the non-operating state can be increased and the filter recovery process can be performed quickly.

Next, the manual recovery control which is executed when the machine is in the operation prohibition state will be explained referring to Fig. 8.

First, the controller 20 detects the exhaust resistance ΔP of the exhaust gas purification device 32 based on the output value of the exhaust resistance sensor 34 and then judges whether or not the exhaust resistance ΔP is the second set value ΔPb (previously set as the exhaust resistance threshold value for judging whether the manual recovery control is necessary or not) or higher (step S500). Since the engine revolution speed and the engine load are controlled at substantially constant levels in the manual recovery control (as will be explained later), the exhaust resistance threshold value for judging whether the manual recovery control is necessary or not may be previously determined and set as a fixed value as an exhaust resistance value corresponding to the constant engine revolution speed and the constant engine load. The same goes for the exhaust resistance threshold value ΔPc (for judging whether the recovery control should be ended or not) which will be explained later.

As explained referring to Fig. 9, the second set value ΔPb has been set to satisfy the relationship ΔPa < ΔPb with the first set value ΔPa and to be as close to the exhaust resistance ΔPLIMIT at the limit PM accumulation amount WLIMIT as possible.

When the exhaust resistance ΔP is less than the second set value ΔPb, the controller 20 ends the process in the current control cycle without any further processing since the PM accumulation has not proceeded to the point at which the filter of the exhaust gas purification device 32 needs the recovery by the manual recovery control. When the exhaust resistance ΔP is the second set value ΔPb or higher, the process advances to the next step.

In the next step, the controller 20 lights up the alarm lamp 37 and thereby informs the operator that the manual recovery process is necessary (step S510).

Subsequently, the controller 20 judges whether the safety lever 12 is at the operation prohibition position or not by detecting whether the switch 13 operating in conjunction with the safety lever 12 is in the OFF state or not (step S520). When the switch 13 is in the ON state, that is, when the safety lever 12 is not at the operation prohibition position (i.e., at the operation permission position), the machine is in the operation permission state. In this case, the machine is in a state unsuitable for the manual recovery control, and thus the controller 20 ends the process in the current control cycle without any further processing. When the switch 13 is in the OFF state, that is, when the safety lever 12 is at the operation prohibition position, the machine is in the operation prohibition state. In this case, the process advances to the next step.

In the next step, the controller 20 judges whether the manual recovery switch 36 has been turned ON or not (step S530). When the manual recovery switch 36 has not been turned ON, the controller 20 ends the process in the current control cycle without any further processing. When the manual recovery switch 36 has been turned ON, the process advances to the next step.

In the next step, the controller 20 extinguishes the alarm lamp 37 (step S540) and executes the exhaust gas temperature increasing control by performing the hydraulic absorption torque increasing control and the engine revolution speed increasing control (step S545) similarly to the automatic recovery control shown in Fig. 7.

Specifically, in the case of the manual recovery control, the engine 1 is necessarily in the idling revolution state since the safety lever is at the operation prohibition position, the pilot cut valve 11 has been closed and the machine is in an inoperable state (in which operation to the machine is impossible). Therefore, in the step S545, the increase in the exhaust gas temperature is promoted by executing the hydraulic absorption torque increasing control (20% - 30% (preferably, about 30%) of the maximum torque of the engine 1) and the engine revolution speed increasing control (approximately 1700 rpm, for example) similarly to the step S412 in the automatic recovery control in the non-operating state shown in Fig. 7.

Also when the machine is in the inoperable state (in which operation to the machine is impossible), no problem occurs even if the absorption torque of the hydraulic pump 2 is increased greatly. Therefore, similarly to the step S412 in the automatic recovery control in the non-operating state shown in Fig. 7, the increment of the absorption torque of the hydraulic pump 2 (hydraulic absorption torque) in the hydraulic absorption torque increasing control in the step S545 may be set greater than 30% of the maximum engine torque (the increment in the operating state). With such a setting, the speed of the exhaust gas temperature increasing control in cases where the machine is in the inoperable state can be increased and efficient recovery control of the filter becomes possible.

In the above explanation, the solenoid proportional valve 38 forms a pump discharge pressure increasing device which is provided in the hydraulic line 2a (through which the hydraulic fluid discharged from the hydraulic pump 2 flows) and increases the discharge pressure of the hydraulic pump 2. The processing function of the controller 20 in the steps S305 - S350 in Fig. 6, the steps S405 - S450 in Fig. 7 and the steps S500 - S610 in Fig. 8 forms a recovery control device which executes the recovery of the exhaust gas purification device 32 by combusting and removing the particulate matter accumulated in the exhaust gas purification device 32 when the exhaust resistance detected by the exhaust resistance sensor 34 has reached or exceeded the set value ΔPa or ΔPb.

The processing function of the controller 20 in the steps S312 and S315 in Fig. 6, the steps S412 and S415 in Fig. 7 and the steps S545 and S550 in Fig. 8 forms an exhaust temperature increasing control device which increases the exhaust gas temperature so as to make the exhaust gas temperature detected by the exhaust temperature sensor 33 reach a preset value by increasing the absorption torque of the hydraulic pump 2 by operating at least the latter one (solenoid proportional valve 38) of the regulator 14 (pump displacement adjusting device) and the solenoid proportional valve 38 (pump discharge pressure increasing device) when the exhaust resistance detected by the exhaust resistance sensor 34 has reached or exceeded the set value ΔPa or ΔPb. The exhaust temperature increasing control device controls at least the operation amount of the solenoid proportional valve 38 so that the increment of the absorption torque of the hydraulic pump 2 amounts to 20% - 30% of the maximum torque of the engine 1.

The processing function of the controller 20 in the steps S305 - S350 in Fig. 6 and the steps S405 - S450 in Fig. 7 forms an automatic recovery control device which automatically starts operation when the exhaust resistance detected by the exhaust resistance sensor 34 has reached or exceeded the set value ΔPa.

The switch 13 forms operation permission state detecting means which detects whether the hydraulic operating machine is in the operation permission state or not. The manual recovery switch 36 forms manual recovery instruction means. The manual recovery instruction means and the processing function of the controller 20 in the steps S500 - S610 in Fig. 8 form a manual recovery control device which issues an alarm when the exhaust resistance detected by the exhaust resistance sensor 34 has reached or exceeded the set value ΔPb and starts operation when the switch 13 (operation permission state detecting means) detects that the hydraulic operating machine is not in the operation permission state and there is an instruction by (received through) the manual recovery switch 36 (manual recovery instruction means).

In this embodiment configured as above, even when the atmospheric temperature as operating environment of the hydraulic operating machine changes in a wide range (e.g., - 30°C - 40°C) and the exhaust gas temperature changes correspondingly, the exhaust gas temperature is increased by operating the solenoid proportional valve 38 so that the exhaust gas temperature as the output value of the exhaust temperature sensor 33 reaches the preset value Ta. Therefore, the recovery process of the exhaust gas purification device can be executed with reliability by increasing the exhaust gas temperature irrespective of the operating environment and economic efficiency can be improved by keeping the fuel consumption at a minimum necessary level.

Further, the present inventors have confirmed that the exhaust gas temperature can be increased to approximately 250°C - 350°C without causing any problem to the operation of the hydraulic operating machine driving hydraulic actuators if the hydraulic absorption torque generated by a hydraulic absorption torque increasing device is approximately 20% - 30% of the aforementioned maximum engine torque. By controlling the operation amount of the solenoid proportional valve 38 so that the increment of the absorption torque of the hydraulic pump 2 amounts to 20% - 30% of the maximum torque of the engine 1, unnecessary and excessive increase in the exhaust gas temperature can be avoided, the fuel consumption can be kept at a minimum necessary level, and the economic efficiency can be improved. Furthermore, even in the operating state, the filter recovery process can be performed by increasing the exhaust gas temperature without causing any problem to the operation of the machine. Consequently, working efficiency can be increased through the improvement of workability during the execution of the recovery control and the reduction of the operation interruption frequency of the machine.

In any type of recovery control (the automatic recovery control in the operating state, the automatic recovery control in the non-operating state, the manual recovery control), the filter recovery process can be performed reliably by increasing the exhaust gas temperature and the fuel consumption can be kept at a minimum necessary level irrespective of the operating environment.

In the case where the exhaust resistance set value in the automatic recovery control for cases where the hydraulic actuator 25 is not being driven is set at the value ΔPd lower than the exhaust resistance set value ΔPa for cases where the hydraulic actuator 25 is being driven, the following effect is achieved: In the non-operating state (i.e., when no hydraulic actuator is being driven) in which the exhaust gas temperature is relatively low and the particulate matter (PM) tends to accumulate relatively more, the PM accumulated on the filter of the exhaust gas purification device 32 can be combusted more frequently than in the operating state (i.e., when a hydraulic actuator is being driven) and the filter of the exhaust gas purification device 32 can be recovered efficiently.

Moreover, since the set value ΔPa for the automatic recovery control is set lower than the set value ΔPb for the manual recovery control, the frequency of the automatic recovery control increases and the frequency of the manual recovery control decreases due to the output value of the exhaust resistance sensor 34 increasing to the set value ΔPb less frequently. This also contributes to the reduction of the operation interruption frequency of the hydraulic operating machine.

In addition, in the automatic recovery control in the operating state, the exhaust resistance threshold value ΔPa for judging whether the automatic recovery control is necessary or not and the exhaust resistance threshold value ΔPc for judging whether the recovery control should be ended or not are determined and set through the aforementioned calculation. Therefore, appropriate threshold values ΔPa and ΔPc incorporating the operating status of the engine can be set and the recovery control can be executed properly.

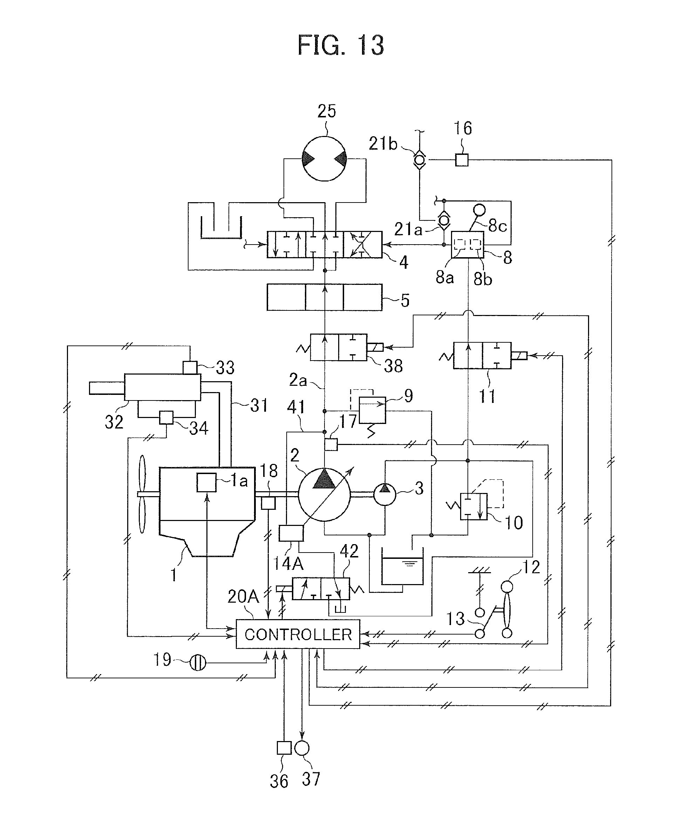

A second embodiment in accordance with the present invention will be described below with reference to Figs. 13 - 16. In this embodiment, the pump torque control is executed directly by the regulator without using the controller.

Fig. 13 is a schematic diagram showing a hydraulic driving system of a hydraulic operating machine equipped with an exhaust gas purification system in accordance with the second embodiment, wherein elements equivalent to those shown in Fig. 1 are assigned the same reference characters. In Fig. 13, the hydraulic driving system of this embodiment is equipped with a controller 20A, a regulator 14A to which the discharge pressure of the hydraulic pump 2 is lead via a hydraulic line 41, and a solenoid proportional valve 42 which operates according to a control signal from the controller 20A and outputs control pressure specifying the target tilting angle qr of the hydraulic pump 2 to the regulator 14A.

When the hydraulic actuator 25 is operated, the controller 20A detects the operation amount of the control lever device 8 and the engine revolution speed at that time with the pressure sensor 16 and the revolution sensor 18, respectively, calculates the target tilting angle of the hydraulic pump 2 through a calculation process for the positive control, and outputs a control signal to the solenoid proportional valve 42 so that the target tilting angle is achieved. The solenoid proportional valve 42 outputs control pressure corresponding to the control signal. The regulator 14A changes the tilting angle of the hydraulic pump 2 according to the control pressure.

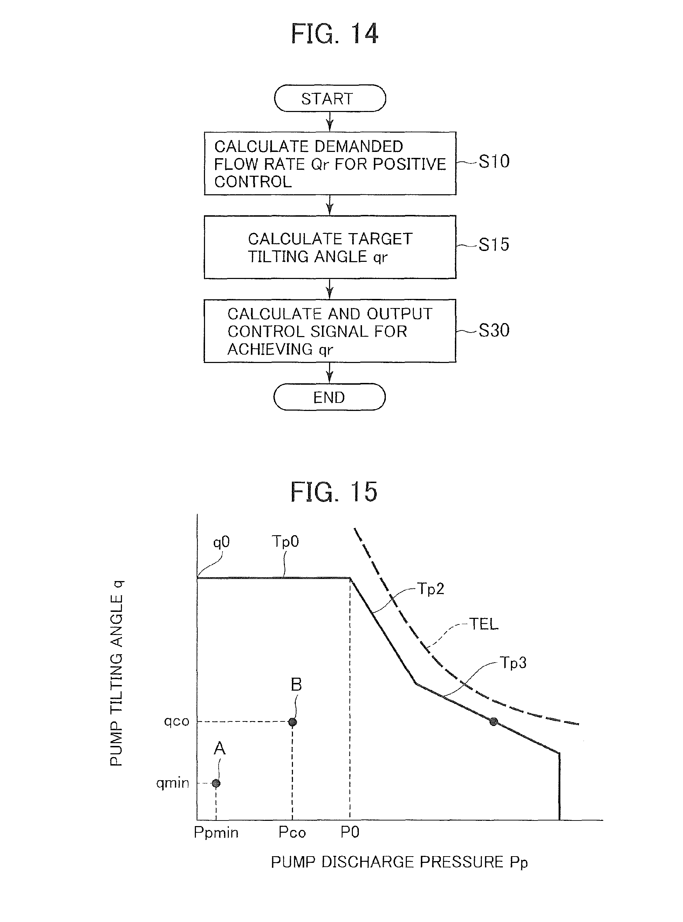

Fig. 14 is a flow chart showing the contents of a calculation process for the positive control of the hydraulic pump 2 executed by the controller 20A, wherein steps identical with those in Fig. 2 are assigned the same reference characters. As is clear from the comparison between Figs. 2 and 14, the controller 20A in this embodiment is configured to execute only the steps S10, S15 and S30 related to the positive control. In the step S30, the controller 20A outputs the control signal for achieving the target tilting angle qr to the solenoid proportional valve 42.

The regulator 14A is configured to execute the positive control based on the output pressure (control pressure) of the solenoid proportional valve 42 while also executing the pump torque control by itself based on the discharge pressure of the hydraulic pump 2 supplied via the hydraulic line 41. Specifically, when the control pressure outputted by the solenoid proportional valve 42 changes, the regulator 14A controls the tilting angle of the hydraulic pump 2 so that the target tilting angle qr specified by the control pressure is achieved (positive control). Further, when the discharge pressure of the hydraulic pump 2 increases and the target tilting angle qr specified by the control pressure reaches or exceeds the maximum tilting angle qmax for the pump torque limiting control, the regulator 14A controls the tilting angle of the hydraulic pump 2 so as to limit the tilting angle to the maximum tilting angle qmax (pump torque limiting control or pump horsepower control). Such a regulator 14A is publicly known.

Fig. 15 is a graph like Fig. 3 showing the absorption torque property of the hydraulic pump 2 acquired as a result of the pump torque limiting control, wherein the horizontal axis represents the discharge pressure Pp of the hydraulic pump 2 and the vertical axis represents the tilting angle (displacement) q of the hydraulic pump 2.

In Fig. 15, the absorption torque property of the hydraulic pump 2 is made up of a constant maximum tilting angle property line Tp0 and constant maximum absorption torque property lines Tp2 and Tp3. The control of the tilting angle of the hydraulic pump 2 when the discharge pressure P of the hydraulic pump 2 is under the first value P0 (on the constant maximum tilting angle property line Tp0) is identical with that in Fig. 3. As the discharge pressure P of the hydraulic pump 2 increases over the first value P0, the maximum tilting angle qmax of the hydraulic pump 2 decreases along the constant maximum absorption torque property lines Tp2 and Tp3 and the absorption torque of the hydraulic pump 2 is kept at maximum torque Tmax which is determined by the property lines Tp2 and Tp3. The constant maximum absorption torque property lines Tp2 and Tp3 have been set based on two springs installed in the regulator 14A. Each property line Tp2, Tp3 is in a shape imitating a hyperbolic curve. The maximum torque Tmax determined by the property lines Tp2 and Tp3 has been set slightly lower than limit torque TEL of the engine 1. With this setting, when the discharge pressure P of the hydraulic pump 2 increases over the first value P0, the absorption torque (input torque) of the hydraulic pump 2 is controlled so as not to exceed the preset maximum torque Tmax (so as not to exceed the limit torque TEL of the engine 1) by decreasing the maximum tilting angle qmax of the hydraulic pump 2.

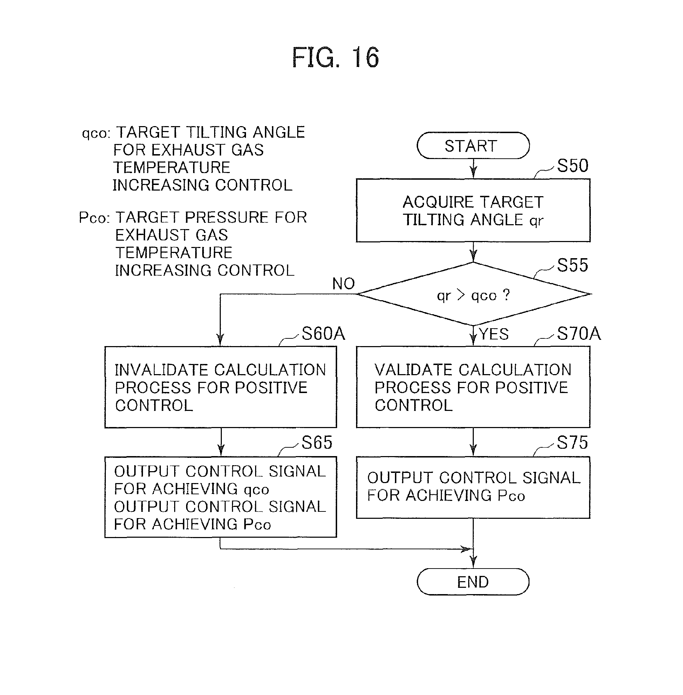

Fig. 16 is a flow chart showing the details of the hydraulic absorption torque increasing control in the step S312 in Fig. 6 regarding the automatic recovery control in the operating state, wherein steps identical with those in Fig. 11 are assigned the same reference characters. As is clear from the comparison between Figs. 11 and 16, the calculation process for the positive control executed by the controller 20A is invalidated in step S60A and validated in step S70A since the controller 20A in this embodiment executes the calculation process for the positive control only. The details of the hydraulic absorption torque increasing control in the step S412 in Fig. 7 regarding the automatic recovery control in the non-operating state and the details of the hydraulic absorption torque increasing control in the step S545 in Fig. 8 regarding the manual recovery control executed when the machine is in the operation prohibition state are no different from those in Fig. 12 in the first embodiment.

According to this embodiment, effects similar to those of the first embodiment can be achieved in hydraulic operating machines in which the pump torque control is executed directly by a regulator 14A.

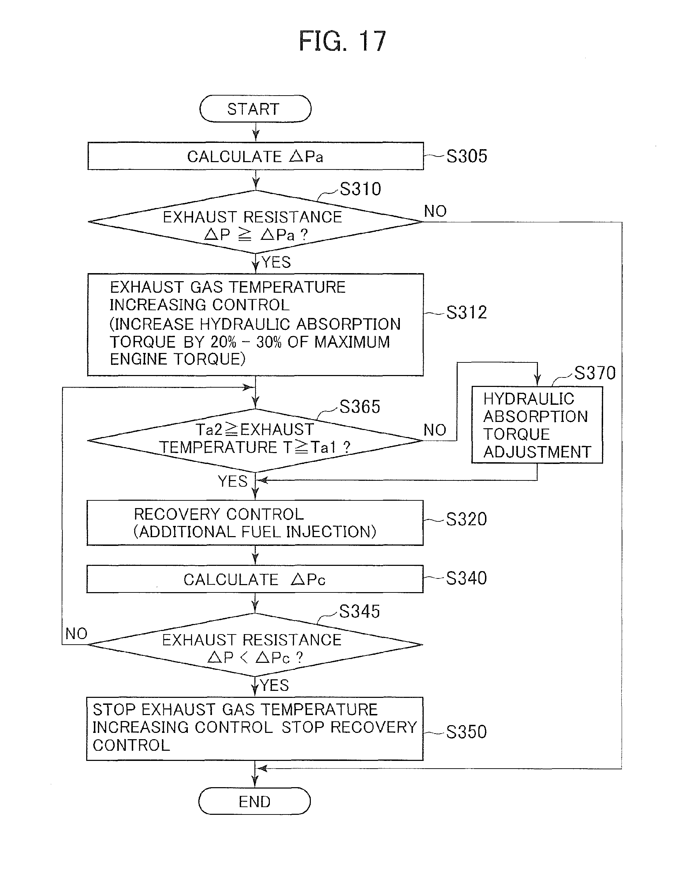

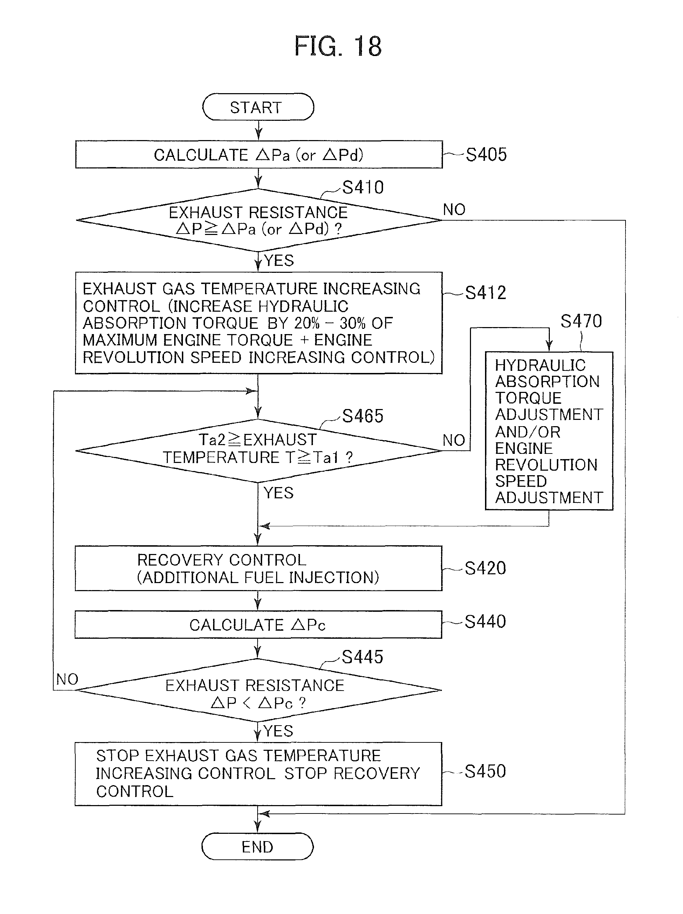

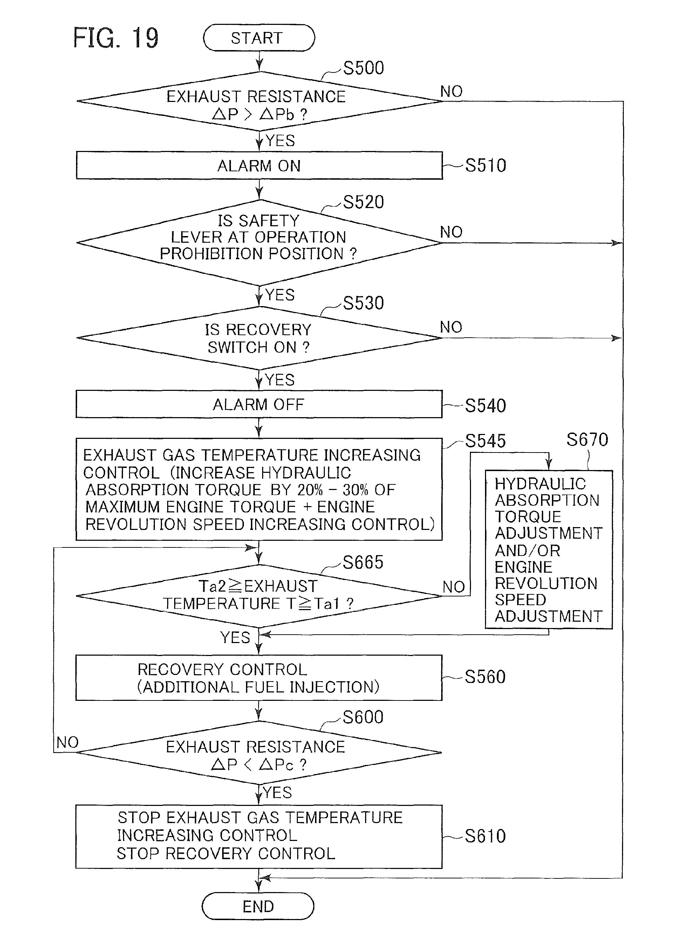

A third embodiment in accordance with the present invention will be described below with reference to Figs. 17 - 19. This embodiment illustrates another example of the exhaust gas temperature increasing control. Fig. 17 is a flow chart showing the contents of the automatic recovery control in the operating state. Fig. 18 is a flow chart showing the contents of the automatic recovery control in the non-operating state. Fig. 19 is a flow chart showing the contents of the manual recovery control when the hydraulic operating machine is in the operation prohibition state. Figs. 17 - 19 correspond to Figs. 6 - 8 in the first embodiment, respectively.

In the first and second embodiments, only the recovery control (additional fuel injection) is executed and no fine adjustment of the exhaust gas temperature T is made after the exhaust gas temperature T has been raised to the threshold value Ta by the exhaust gas temperature increasing control. In this embodiment, the exhaust gas temperature T is adjusted to be within a prescribed temperature range with respect to the threshold value Ta even after the exhaust gas temperature T has reached/exceeded the threshold value Ta due to the exhaust gas temperature increasing control, by meticulously performing the hydraulic absorption torque increasing control and/or the engine revolution speed increasing control.

Specifically, after executing the exhaust gas temperature increasing control (hydraulic absorption torque increasing control) in the step S312 in Fig. 17, the controller 20A judges whether the exhaust gas temperature T in the exhaust gas purification device 32 is within a preset temperature range between reference temperatures Ta1 and Ta2 or not based on the output value of the exhaust temperature sensor 33 (step S365). When the exhaust gas temperature T is within the preset temperature range, the controller 20A starts the recovery control (additional fuel injection) (step S320). When the exhaust gas temperature T is not within the preset temperature range, the controller 20A adjusts the torque increment of the hydraulic absorption torque increasing control (step S370) and repeats the torque increment adjustment until the exhaust gas temperature T comes within the preset temperature range (step S365 → S370).

Here, the reference temperatures Ta1 and Ta2 specifying the preset temperature range satisfy a relationship Ta1 < Ta2. The reference temperature Ta1 may be set equal to the threshold value Ta in the first and second embodiments, for example. The reference temperature Ta2 is set slightly (e.g., 5°C - 50°C (preferably, about 10°C - 30°C)) higher than Ta1.

The torque increment adjustment in the hydraulic absorption torque increasing control is made by increasing/decreasing at least one of the target tilting angle qco and the target pressure Pco for the hydraulic absorption torque increasing control by a prescribed amount when the target tilting angle qr for the positive control is less than or equal to the target tilting angle qco for the hydraulic absorption torque increasing control. When the target tilting angle qr for the positive control is greater than the target tilting angle qco for the hydraulic absorption torque increasing control, the torque increment adjustment in the hydraulic absorption torque increasing control is made by increasing/decreasing the target pressure Pco for the hydraulic absorption torque increasing control by a prescribed amount in order to avoid ill effect on the positive control. By increasing/decreasing the target tilting angle qco by a prescribed amount, the operation amount of the regulator 14 is controlled and the tilting angle (displacement) of the hydraulic pump 2 is adjusted. By increasing/decreasing the target pressure Pco by a prescribed amount, the operation amount (opening area) of the solenoid proportional valve 38 is controlled and the discharge pressure of the hydraulic pump 2 is adjusted. Therefore, by increasing/decreasing at least one of the target tilting angle qco and the target pressure Pco by a prescribed amount, the absorption torque of the hydraulic pump 2 is controlled and the engine load is increased/decreased, by which the exhaust gas temperature can be adjusted.

Also in the steps S465 and S470 in Fig. 18 and the steps S665 and S670 in Fig. 19, a process substantially identical with that of the steps S365 and S370 in Fig. 17 is executed. However, it is unnecessary to consider the ill effect on the positive control in Figs. 18 and 19 (control in the non-operating state). Thus, the torque increment adjustment in the hydraulic absorption torque increasing control in the steps S470 and S670 may be made constantly by increasing/decreasing at least one of the target tilting angle qco and the target pressure Pco for the hydraulic absorption torque increasing control by a prescribed amount. Incidentally, the adjustment of the exhaust gas temperature described above may be made also by increasing/decreasing the engine revolution speed in the engine revolution speed increasing control in combination with or in place of the torque increment adjustment in the hydraulic absorption torque increasing control.

In the above explanation, the processing function of the controller 20A in the steps S305 - S350, S365 and S370 in Fig. 17, the steps S405 - S450, S465 and S470 in Fig. 18, and the steps S500 - S610, S665 and S670 in Fig. 19 forms a recovery control device which executes the recovery of the exhaust gas purification device 32 by combusting and removing the particulate matter accumulated in the exhaust gas purification device 32 when the exhaust resistance detected by the exhaust resistance sensor 34 has reached or exceeded the set value ΔPa or ΔPb.

The processing function of the controller 20A in the steps S312, S365 and S370 in Fig. 17, the steps S412, S465 and S470 in Fig. 18 and the steps S545, S665 and S670 in Fig. 19 forms an exhaust temperature increasing control device which increases the exhaust gas temperature so as to make the exhaust gas temperature detected by the exhaust temperature sensor 33 reach a preset value by increasing the absorption torque of the hydraulic pump 2 by operating at least the latter one (solenoid proportional valve 38) of the regulator 14 (pump displacement adjusting device) and the solenoid proportional valve 38 (pump discharge pressure increasing device) when the exhaust resistance detected by the exhaust resistance sensor 34 has reached or exceeded the set value ΔPa or ΔPb.

The steps S365 and S370 (Fig. 17), the steps S465 and S470 (Fig. 18) and the steps S665 and S670 (Fig. 19) form an exhaust temperature adjusting device which adjusts at least one selected from the operation amount of the regulator 14 or 14A (pump displacement adjusting device), the operation amount of the solenoid proportional valve 38 (pump discharge pressure increasing device) and the increment of the engine revolution speed so that the exhaust gas temperature remains within a preset range Ta1 - Ta2 after the exhaust gas temperature detected by the exhaust temperature sensor 33 has been increased to the preset value Ta1.

In this embodiment configured as above, the torque increment in the hydraulic absorption torque increasing control and/or the increment of the engine revolution speed in the engine revolution speed increasing control is finely adjusted so that the exhaust gas temperature T remains within the preset temperature range. Therefore, the exhaust gas temperature T can be reliably controlled and kept within the preset temperature range. Consequently, ill effect on the operation can be minimized in the recovery control in the operating state. In the recovery control in the non-operating state, unnecessary increase in the engine load can be avoided and the fuel consumption can be kept at a minimum necessary level irrespective of the operating environment, by which the economic efficiency can be improved further.

Incidentally, while the fuel injection for the recovery control in the above embodiments is executed by means of the post-injection (additional injection) in the expansion stroke after the main injection of the engine, the fuel injection for the recovery control may also be carried out by providing the exhaust line with an extra fuel injection device for the recovery control and operating the fuel injection device.

While the hydraulic absorption torque increasing control in the above embodiments is executed by providing the solenoid proportional valve 38 (for exerting the load for increasing the exhaust gas temperature on the engine in the recovery control) in the discharging hydraulic line 2a of the hydraulic pump 2 and controlling the operation amount (opening area) of the solenoid proportional valve 38, the solenoid proportional valve 38 may also be placed at the downstream end of a center bypass hydraulic line penetrating the flow/directional control valve 4. Further, the exertion of the load on the engine may also be implemented by use of different means.

While the present invention has been applied to a hydraulic shovel as an example of a hydraulic operating machine in the above embodiments, the present invention may of course be applied to hydraulic operating machines other than hydraulic shovels (wheel shovels, crane trucks, etc.). Also in such cases, effects similar to those of the above embodiments can be achieved.

### Description of Reference Numerals

- 1: engine
- 1a: electronic governor
- 2: main hydraulic pump
- 2a: discharging hydraulic line
- 3: pilot pump
- 4, 5: flow/directional control valve
- 8: control lever device
- 8a, 8b: pilot valve
- 9: main relief valve
- 10: pilot relief valve
- 11: pilot cut valve
- 12: safety lever (gate lock lever)
- 13: switch
- 14, 14A: regulator
- 16: pressure sensor
- 17: pressure sensor
- 18: revolution sensor
- 19: engine control dial
- 20, 20A: controller
- 21a, 21b: shuttle valve
- 25: hydraulic actuator
- 31: exhaust line
- 32: exhaust gas purification device
- 33: exhaust temperature sensor
- 34: exhaust resistance sensor
- 36: manual recovery switch
- 37: alarm lamp
- 38: solenoid proportional valve (hydraulic absorption torque increasing device)
- 41: hydraulic line
- 42: solenoid proportional valve

## Claims

1. An exhaust gas purification system for a hydraulic operating machine equipped with a diesel engine (1), an exhaust gas purification device (32) provided in an exhaust line (31) of the engine, a variable displacement hydraulic pump (2) driven by the engine, a pump displacement adjusting device (14, 14A) for controlling the displacement of the hydraulic pump, and at least one hydraulic actuator (25) driven by hydraulic fluid discharged from the hydraulic pump, comprising:
an exhaust resistance sensor (34) for detecting exhaust resistance of the exhaust gas purification device (32);
an exhaust temperature sensor (33) for detecting temperature of exhaust gas in the exhaust gas purification device;
a pump discharge pressure increasing device (38) provided in a hydraulic line (2a), through which the hydraulic fluid discharged from the hydraulic pump (2) flows, for increasing discharge pressure of the hydraulic pump; and
a recovery control device (20, 20A) for executing recovery of the exhaust gas purification device by combusting and removing particulate matter accumulated in the exhaust gas purification device when the exhaust resistance detected by the exhaust resistance sensor has reached or exceeded a set value,
wherein the recovery control device includes an exhaust temperature increasing control device (20, 20A) which increases the exhaust gas temperature so as to make the exhaust gas temperature detected by the exhaust temperature sensor reach a preset value by increasing absorption torque of the hydraulic pump by operating at least the latter one of the pump displacement adjusting device (14, 14A) and the pump discharge pressure increasing device (38) when the exhaust resistance detected by the exhaust resistance sensor has reached or exceeded the set value.

2. The exhaust gas purification system for a hydraulic operating machine according to claim 1, wherein the exhaust temperature increasing control device (20, 20A) controls an operation amount of at least the latter one of the pump displacement adjusting device (14, 14A) and the pump discharge pressure increasing device (38) so that an increment of the absorption torque of the hydraulic pump (2) amounts to 20% - 30% of maximum torque of the engine (1).

3. The exhaust gas purification system for a hydraulic operating machine according to claim 1 or 2, wherein the exhaust temperature increasing control device (20,20A) includes an exhaust temperature adjusting device which adjusts at least one selected from an operation amount of the pump displacement adjusting device (14, 14A), an operation amount of the pump discharge pressure increasing device (38) and an increment of revolution speed of the engine so that the exhaust gas temperature remains within a preset range after the exhaust gas temperature detected by the exhaust temperature sensor (33) has been increased to the preset value.

4. The exhaust gas purification system for a hydraulic operating machine according to any one of claims 1 - 3, wherein the recovery control device is an automatic recovery control device (20, 20A) which automatically starts operation when the exhaust resistance detected by the exhaust resistance sensor has reached or exceeded the set value.

5. The exhaust gas purification system for a hydraulic operating machine according to claim 4, further comprising operation detecting means for detecting whether the hydraulic actuator (25) is being driven or not,
wherein the exhaust temperature increasing control device (20, 20A) increases the exhaust gas temperature by increasing the absorption torque of the hydraulic pump by operating at least the latter one of the pump displacement adjusting device (14, 14A) and the pump discharge pressure increasing device (38) when the hydraulic actuator (25) is being driven.

6. The exhaust gas purification system for a hydraulic operating machine according to claim 5, wherein when the hydraulic actuator (25) is not being driven, the exhaust temperature increasing control device (20, 20A) increases the exhaust gas temperature by increasing revolution speed of the engine to a preset revolution speed and increasing the absorption torque of the hydraulic pump (2) by operating the pump displacement adjusting device (14, 14A) and the pump discharge pressure increasing device (38).

7. The exhaust gas purification system for a hydraulic operating machine according to any one of claims 1 - 3, further comprising:
operation permission state detecting means (13) for detecting whether the hydraulic operating machine is in an operation permission state or not; and
manual recovery instruction means (36), wherein:
the recovery control device is a manual recovery control device (36, 20, 20A) which issues an alarm when the exhaust resistance detected by the exhaust resistance sensor (34) has reached or exceeded the set value and starts operation when the operation permission state detecting means detects that the hydraulic operating machine is not in the operation permission state and there is an instruction by the manual recovery instruction means, and
the exhaust temperature increasing control device (20, 20A) increases the exhaust gas temperature by increasing revolution speed of the engine to a preset revolution speed and increasing the absorption torque of the hydraulic pump (2) by operating the pump displacement adjusting device (14, 14A) and the pump discharge pressure increasing device (38).

8. The exhaust gas purification system for a hydraulic operating machine according to any one of claims 4 - 6, wherein the exhaust temperature increasing control device (20, 20A) previously stores an exhaust resistance threshold value, for judging whether the recovery of the exhaust gas purification device by the automatic recovery control device (20, 20A) is necessary or not, as a function of engine revolution speed and an engine load, determines the exhaust resistance threshold value by referring to current engine revolution speed and engine load and inputting them to the function, and sets the determined exhaust resistance threshold value as the set value.

9. The exhaust gas purification system for a hydraulic operating machine according to claim 4, wherein the automatic recovery control device (20, 20A) sets the set value of the exhaust resistance at a lower value when the hydraulic actuator is not being driven compared to cases where the hydraulic actuator is being driven.

10. The exhaust gas purification system for a hydraulic operating machine according to any one of claims 1 - 3, wherein:
the recovery control device includes an automatic recovery control device (20, 20A) which automatically starts operation when the exhaust resistance detected by the exhaust resistance sensor has reached or exceeded the set value and a manual recovery control device (36, 20, 20A) which issues an alarm when the exhaust resistance detected by the exhaust resistance sensor (34) has reached or exceeded the set value and starts operation when the operation permission state detecting means detects that the hydraulic operating machine is not in the operation permission state and there is an instruction by the manual recovery instruction means, and
the set value in the automatic recovery control device (20, 20A) is set lower than the set value in the manual recovery control device (36, 20, 20A).
